# EUROPÄISCHE PATENTSCHRIFT

(11) **EP 3 790 842 B1**
(45) Veröffentlichungstag und Bekanntmachung des Hinweises auf die Patenterteilung: **30.08.2023**
(21) Anmeldenummer: 19726891.5
(22) Anmeldetag: 03.05.2019
(51) Int. Cl.: C01B 3/04, B01J 29/12, F24S 20/20, F24S 50/40, F24S 50/80, F24S 70/10, F24S 70/65, F24S 90/00, F24S 80/00, B01J 19/12

(54) **SOLARER RECEIVER-REAKTOR**
SOLAR RECEIVER-REACTOR
RÉACTEUR-RÉCEPTEUR SOLAIRE

(30) Priorität: 07.05.2018 CH 5682018; 09.08.2018 CH 9742018
(43) Veröffentlichungstag der Anmeldung: 17.03.2021
(73) Patentinhaber: Synhelion SA, 6900 Lugano (CH); ENI S.p.A., 00144 Roma (IT)
(72) Erfinder: AMBROSETTI, Gianluca, 6925 Gentilino (CH); GOOD, Philipp, 8006 Zürich (CH)
(74) Vertreter: Stump, Beat
(86) Internationale Anmeldenummer: PCT/CH2019/050009
(87) Internationale Veröffentlichungsnummer: WO 2019/213787

(56) Entgegenhaltungen:
- EP-A1- 2 728 022
- WO-A1-2016/172144
- WO-A1-2017/197536
- DE-A1-102010 053 902
- US-A1- 2006 188 433

## Beschreibung

Die vorliegende Erfindung betrifft einen solaren Receiver-Reaktor, d.h. einen Reaktor, der direkt durch die Energie der Sonnenstrahlung betrieben wird.

Einer der zahlreichen Anwendungsfälle liegt im Bereich der Herstellung solarer Brennstoffe (solar fuels), deren Ausgangsstoffe H₂ (Wasserstoff) und CO (Kohlenmonoxid) unter Zufuhr von Energie - namentlich Wärme bei hohen Temperaturen - aus H₂O (Wasser) und CO₂ (Kohlendioxid) gebildet werden. Ein Gasgemisch, welches hauptsächlich H₂ und CO -neben weiteren Gasen- enthält, nennt man Synthesegas oder einfach Syngas. Dieses Syngas dient der Herstellung von flüssigen oder gasförmigen Kohlenwasserstoff-Treibstoffen.

Bevorzugt wird Syngas durch eine Redoxreaktion gewonnen, so dass der Reaktor wechselweise zwischen einer oberen, der Reduktionstemperatur Tr_{ed} und einer unteren, der Oxidationstemperatur Tₒₓ, betrieben werden muss.

In einer ETH Dissertation No. 21864 "SOLAR THERMOCHEMICAL CO2 AND H2O SPLITTING VIA CERIA REDOX REACTIONS" von Philipp Furler wird ein experimenteller, solarer Cerium-Reaktor beschrieben, mit welchem unter Einstrahlung von konzentriertem Sonnenlicht (2865 Sonnen, d.h. einer thermischen Strahlung von bis zu 2865 kW/m²) Synthesegas herstellbar ist.

Sonnenlicht in oben erwähnter Konzentration kann auf industrieller Basis beispielsweise mit einem Dish-Konzentrator gemäss der WO 2011/072410 erzeugt werden, so dass die kommerzielle Produktion von Synthesegas unter Verwendung von erneuerbarer bzw. regenerierbarer Energie realistisch geworden ist. Zudem wird heute zunehmend Sonnenlicht in genügend konzentrierter Form in Solar-Turmkraftwerken erzeugt, wobei jedoch Receiver-Reaktoren in der Regel nicht vorgesehen sind, sondern Wärme erzeugt wird, die als Industriewärme von einem Verbraucher genutzt oder beispielsweise zur Stromerzeugung verwendet wird. Entsprechend erwärmt der Receiver des Trumkraftwerks ein Wärme transportierendes Medium auf eine Temperatur Tₒ, das vom Verbraucher gekühlt und den Receiver im Kreislauf zur erneuten Erwärmung mit einer Temperatur Tᵢₙ wieder erreicht.

In Solar-Turmkraftwerken werden im Wesentlichen räumlich ausgebildete Receiver eingesetzt, die für hohe Temperaturen geeignet sind, wie sie beispielsweise bei einer Konzentration von 500 Sonnen, 1000 Sonnen oder mehr erreicht werden. Solche Temperaturen liegen in der Regel über 800 K, und können in naher Zukunft den Bereich von 1500 K oder mehr erreichen. Solche Receiver können, allerdings in kleinerem Massstab, auch bei Dish-Konzentratoren verwendet werden. Als räumliche Receiver werden vorliegend Receiver bezeichnet, deren Abmessungen in alle drei Dimensionen vergleichbar gross sind, im Gegensatz zu rohrförmigen Receivern, die in Verbindung mit Trough- oder Rinnen -Kollektoren verwendet werden. Solche rohrförmigen Receiver besitzen eine Dimension, die Länge, die ein Vielfaches, im Bereich des Zehn- oder Hundertfachen oder mehr der Querschnittsabmessungen Breite bzw. Höhe beträgt. Receiver für Rinnenkollektoren sind nicht für die oben genannten Temperaturen ausgebildet, da der rinnenförmige Konzentrator in Bezug auf den Receiver in zwei Dimensionen konzentriert, das Feld der Heliostaten bei einem Turmkraftwerk oder ein Dish-Konzentrator jedoch in drei Dimensionen.

Unter Anderem sind Volumetrische Receiver bekannt, die auch für Solar-Turmkraftwerke geeignet sind, wobei sich in solchen Receivern die geforderten Temperaturen von mehr als 800 K, bis 1300 K, erreichen lassen. Allerdings führen die hohen Betriebstemperaturen zu erheblichem konstruktivem Aufwand.

Volumetrische Receiver besitzen eine ausgedehnte Absorberstruktur, die beispielsweise aus einem voluminösen Drahtgeflecht oder einem offenporösen Keramikschaum bestehen kann. Die konzentrierte Sonnenstrahlung dringt dann in das Innere der Absorberstruktur ein und wird dort absorbiert. Ein Wärme transportierendes Medium wie Luft wird durch die offenporöse Absorberstruktur hindurch geleitet und nimmt so mittels erzwungener Konvektion an der offenporösen Absorberstruktur Wärme auf. Die Absorberstruktur kann auch aus einer Röhrenstruktur, einer in die Tiefe gestaffelten Gitterstruktur oder einer an sich beliebigen Struktur mit grosser Oberfläche bestehen, welche den konvektiven Wärmeübergang von der Absorberstruktur zum Wärme transportierenden Medium bewirkt, wenn dieses den Absorber durchströmt.

Ein volumetrischer Receiver ist beispielsweise durch das REFOS Projekt bekannt geworden (Receiver for solar-hybrid gas turbine and combined cycle systems; R. Buck, M. Abele, J. Kunberger, T. Denk, P. Heller and E. Lüpfert, in Journal de Physique IV France 9 (1999) ). Durch einen Receiver in der Art des gezeigten REFOS Receiver lässt sich eine Austrittstemperatur Tₒᵤₜ von 1100 K, mit einem keramischen Absorber von 1300 K erreichen.

Solche Receiver weisen den Nachteil auf, dass die Absorberstruktur aufwendig herzustellen und die Durchströmung des Absorbers oft instabil ist, insbesondere auf Grund einer sich im Betrieb unerwünscht einstellenden Temperaturverteilung, und dass für die Durchströmung beträchtliche Strömungsverluste in Kauf genommen werden müssen.

Gemäss der oben erwähnten ETH Dissertation wird in einem ersten, endothermischen Prozessschritt bis zu einer oberen Temperatur von 1800 K Cerium unter Bildung von Sauerstoff reduziert; anschliessend wird das Cerium nach dem Abschluss der Reduktion auf eine untere Temperatur von 1100 K gekühlt und in einem nachfolgenden Prozessschritt das Synthesegas durch exothermisches Reoxidieren produziert; dabei ist jedoch die endothermisch benötigte Wärme für die Produktion des Syngases viel grösser als die durch die Oxidation anfallende exothermische Wärme. Dieser Prozess kann für eine fortlaufende Produktion von Synthesegas zyklisch wiederholt werden; hierfür muss das Cerium konsequenterweise periodisch auf 1800 K erwärmt werden und auf 1100 K abgekühlt werden. Für eine Rekuperation von durch die Abkühlung entnommener Wärme wird eine Doppel-Ringkonstruktion eines Cerium-Trägers vorgeschlagen. Zwei gegenläufig drehende, aneinander anliegende Cerium-Ringe mit gemeinsamer Rotationsachse liegen zwischen der warmen Zone (1800 K) und der kalten Zone (1100 K) derart, dass sich ein Abschnitt eines jeden Ringes in der warmen Zone auf einer 12-Uhr-Position und ein gegenüberliegender Abschnitt in der kalten Zone auf einer 6-Uhr-Position befindet. Durch eine gegenläufige Drehung unmittelbar benachbarter Cerium-Ringe wandert der kalte Abschnitt eines ersten Cerium-Rings im Uhrzeigersinn in Richtung der warmen Zone und der warme Abschnitt in Richtung der kalten Zone und bei einem zweiten, sich gegen den Uhrzeigersinn drehenden Cerium-Ring wandert ebenfalls der kalte Abschnitt in Richtung der warmen Zone und der warme Abschnitt in Richtung der kalten Zone, wobei beide Cerium-Ringe aneinander vorbei streifen und dadurch laufend Wärmenergie tauschen. Entsprechend werden gegenseitig warme Abschnitte gekühlt und kalte Abschnitte erwärmt, was eine Rekuperation einer Wärmemenge ermöglicht. Der Wirkungsgrad der Rekuperation ist jedoch konstruktionsbedingt klein und liegt etwa bei 25%. Die Anforderungen an die Konstruktion und die Standfestigkeit gegenläufig rotierender, aneinander anliegender Cerium-Ringe - Wärmeübergang, Wärmeabstrahlung und mechanischer Aufwand - sind gross.

Der Erfindung liegt deshalb die Aufgabe zugrunde, einen Receiver-Reaktor einfacher Konstruktion mit hohem Wirkungsgrad zu schaffen.

Diese Aufgabe wird durch ein Verfahren mit den Merkmalen von Anspruch 1 oder durch einen Receiver-Reaktor mit den Merkmalen von Anspruch 13 gelöst.

Dadurch, dass in einem solaren Receiver der Absorber den Redox-Reaktor bildet und diesem im Pfad der Sonnenstrahlung ein Absorptionsraum für die Schwarzkörperstrahlung des Absorbers vorgeschaltet ist, reduzieren sich die Wärmeverluste des Systems ohne weiteren konstruktiven Aufwand massgeblich. Wird weiter als oxidierendes Gas ein die Schwarzkörperstrahlung des Absorbers absorbierendes Gas verwendet, vereinfacht sich die Konstruktion zusätzlich, da dann der Absorptionsraum zugleich als einfach ausgebildeter Reaktorraum verwendet werden kann und als die Rückstrahlung abschirmende Zone dient.

Über die gestellte Aufgabe hinaus kann die Wärme der Rückstrahlung für die periodische Erwärmung des Absorbers auf die Reduktionstemperatur und/oder für eine Receiver-Reaktor externe Nutzung vorgesehen werden, wie dies bei konventionellen Receivern der Fall ist.

Grundsätzlich ist es so, dass das erfindungsgemässe Konzept, d.h. das soweit überhaupt möglich und damit nahezu vollständige Shielding des Receiver-Reaktors durch absorptive Gase dessen für die Redox-Reaktion benötigten hohen Temperaturen mit Hilfe einer einfachen, industrietauglichen Konstruktion des Receivers überhaupt erst ermöglichen.

Weitere bevorzugte Ausführungsformen weisen die Merkmale der abhängigen Ansprüche auf.

Die Erfindung wird nachstehend anhand der Figuren noch etwas näher beschrieben.

Es zeigt:
- Figur 1a: schematisch ein Solarturmkraftwerk mit einer Ausführungsform des erfindungsgemässen Receiver-Reaktors,
- Figur 1b: schematisch das Solarturmkraftwerk von Figur 1a mit einer weiteren Ausführungsform des erfindungsgemässen Receiver-Reaktors,
- Figur 2a: schematisch den Aufbau des erfindungsgemässen Receiver-Reaktors, wobei der Absorberraum als Reaktorraum ausgebildet ist,
- Figur 2b: ein Diagramm mit den Rest- Strahlungsverlusten eines Receiver-Reaktors nach Figur 2a,
- Figur 3a: ein Diagramm mit Betriebstemperaturen einer beispielhaften Syngasproduktion eines Receiver-Reaktors gemäss Figur 2a,
- Figur 3b: ein Diagramm mit der Temperatur des Absorbers eines Receiver-Reaktors gemäss Figur 2a in Abhängigkeit der Austrittstemperatur des Wärme transportierenden Fluids,
- Figur 3c: ein Diagramm mit der Temperatur des Wärme transportierenden Fluids im Betrieb des Receiver-Reaktors gemäss Figur 3a,
- Figur 4a: schematisch einen Längsschnitt durch einen erfindungsgemässen ReceiverReaktor, wobei der Absorptionsraum vom Reaktorraum getrennt ist,
- Figur 4b: schematisch einen Querschnitt durch den Receiver-Reaktor von Figur 4a, wobei der Absorptionsraum vom Reaktorraum getrennt ist,
- Figur 5a: schematisch ein modifizierter Receiver-Reaktor für die Verwendung von teilerwärmtem Wärme transportierendem Fluid,
- Figur 5b: schematisch noch eine weitere Ausführungsform des erfindungsgemässen Receiver-Reaktors mit einem Sekundärabsorber,
- Figur 5c: schematisch noch eine weitere Ausführungsform des erfindungsgemässen Receiver-Reaktors,
- Figur 5d: schematisch noch eine weitere Ausführungsform des erfindungsgemässen Receiver-Reaktors.

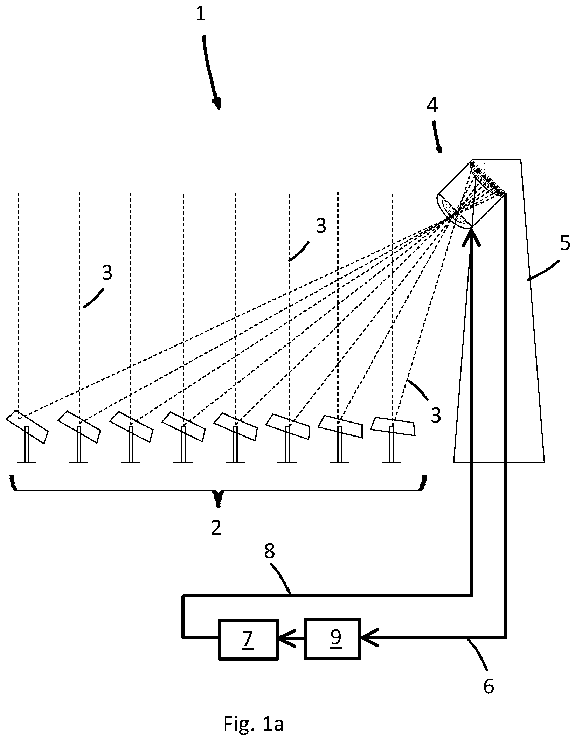

Figur 1a zeigt schematisch ein Solar-Turmkraftwerk 1, mit einem Feld von Heliostaten 2, die auf bekannte Weise Strahlen 3 der Sonne konzentriert auf einen erfindungsgemässen Receiver-Reaktor 4 lenken, der seinerseits auf einem Turm 5 angeordnet ist. Die im Receiver-Reaktor 4 anfallende, jedoch für die in ihm ablaufende Redox-Reaktion aktuell nicht verwertbare oder nicht benötigte Wärme wird erfindungsgemäss über ein absorptiv erwärmtes, Wärme transportierendes Fluid mit einer (höheren) Temperatur Tₒ über eine Leitung 6 zu einem Verbraucher 7 (der nachstehend einfach als Wärmetauscher bezeichnet wird), geführt, wo es sich abkühlt und dann über eine Leitung 8 mit einer (tieferen) Temperatur Tᵢₙ im Kreislauf wieder zum Receiver-Reaktor 4 zurückgeführt wird.

Figur 1a zeigt eine erste erfindungsgemässe Ausführungsform, bei welcher das absorptiv erwärmbare Wärme tauschende Fluid zugleich ein an der Redox-Reaktion teilnehmendes Gas ist, welches damit stromabwärts vom Reaktor Syngasbestandteile enthalten kann. Entsprechend werden in der Leitung 6 auch diese Syngasbestandteile als Reaktionsprodukte in eine Trennstation 9 geführt, wo sie von dem Wärme transportierenden Fluid für die weitere Verwendung getrennt werden. Damit ergibt sich ein Solarer Reaktor-Receiver bei welchem bevorzugt die Kreislauf-Leitungsanordnung 6,8 weiter eine Trennstation 9 aufweist, die ausgebildet ist, aus dem Wärme transportierenden Fluid Syngas abzutrennen und für die Entnahme aus dem Kreislauf bereit zu stellen.

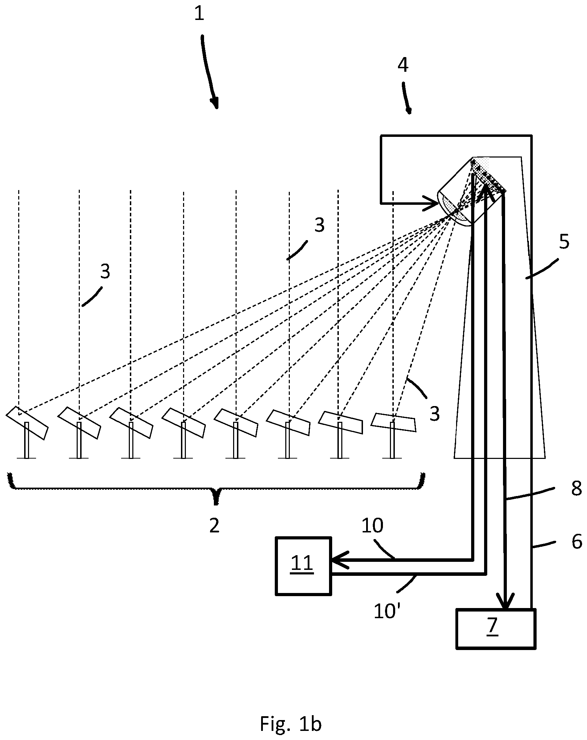

Figur 1b zeigt eine zweite erfindungsgemässe Ausführungsform, wobei das absorptiv erwärmte, Wärme tauschende Fluid und die das bzw. die an der Redox-Reaktion teilnehmenden Gase in getrennten Leitungsanordnungen geführt werden: neben dem durch die Leitungen 6 und 8 mit dem Wärmetauscher 7 gebildeten Kreislauf für das Wärme transportierende Fluid sind weiter Leitungen 10, 10' für den Transport von an der Redox-Reaktion teilnehmenden Gasen vorgesehen, welche in einer Verfahrenseinheit 11 betriebsfähig aufbereitet werden, so dass das Syngas in der Verfahrenseinheit 11 gewonnen werden kann.

Beiden Ausführungsformen (Figuren 1a bzw. 1b) ist gemeinsam, dass durch die Redox-Reaktion im Receiver-Reaktor nicht konsumierte Wärme absorptiv erfasst und einem Verbraucher bzw. Wärmetauscher 7 zugeführt wird. Damit kann diese Wärme auf konstruktiv einfachste Weise gewonnen und beliebig genutzt werden. Im Fall des nachstehend beschriebenen Redox-Prozesses, bei welchem der Reaktor zwischen einer unteren Oxidationstemperatur Tₒₓ und einer oberen Reduktionstemperatur T_{red} hin- und herschwingt, kann diese Wärme u.a. auch für den Temperaturanstieg auf die Reduktionstemperatur eingesetzt werden.

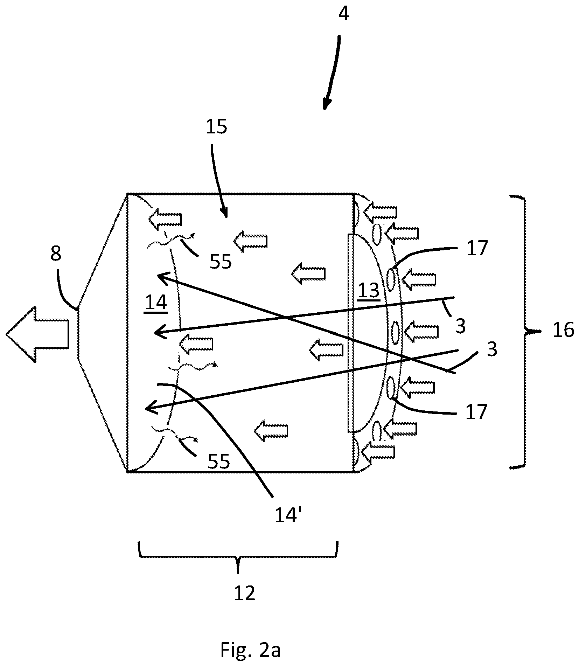

Figur 2a zeigt schematisch den Aufbau eines erfindungsgemässen, als räumlichen Receiver ausgebildeten Receiver-Reaktors 4.

Der Receiver-Reaktor 4 weist einen Erwärmungsbereich 12, mit einer optische Öffnung 13, beispielsweise ein Quarzfenster, und einen Absorber 14 auf, wobei zwischen dem Quarzfenster 13 und dem Absorber 14 ein Absorptionsraum 15 vorgesehen ist, der von dem Wärme transportierenden Medium den eingezeichneten Pfeilen entsprechend von rechts nach links, d.h. gegen den Absorber 4 hin, durchströmt wird. Dazu weist die Transporteinrichtung 16 um das Quarzfenster 13 herum angeordnete (mit der Leitung 8 verbundene, s. Fig 1) Einlassstutzen 17 für Wärme transportierendes Medium mit der Temperatur Tᵢₙ auf, die in den Absorptionsraum 5 führen, und einen zentralen, hinter dem Absorber 4 angeordneten Auslassstutzen 8 für Wärme transportierendes Medium mit der Temperatur Tₒ (der in die Leitung 6 mündet, s. Figur 1).

Der Absorber 14 ist erfindungsgemäss als Reaktorelement ausgebildet, durch welches die dargestellte Anordnung von einem Receiver zu einem Receiver-Reaktor wird, d.h. einer Anordnung, in welcher konzentrierte Sonnenstrahlung beispielsweise aus einem Solar-Turmkraftwerk verwendet wird, um unter den nachstehend beschriebenen Bedingungen eine Redox-Reaktion ablaufen zu lassen, hier bevorzugt die Produktion von Syngas.

Dazu weist der als Redox-Reaktor ausgebildete Absorber 4 ein reduzierbares und oxidierbares Material für einen Reduktions- und einen Oxidationsprozess auf, bevorzugt CeO₂, das bei erhöhter Temperatur reduziert bzw. in Anwesenheit eines oxidierenden Gases oxidiert werden kann. Andere Materialien kann der Fachmann für den konkreten Fall festlegen, so beispielsweise Ceriumdioxid (CeO₂), dotiertes CeO₂, oder Perovskite.

Weiter ist der Absorber 14 erfindungsgemäss als Schwarzkörper-Strahlungsanordnung ausgebildet, d.h. er besitzt eine im Pfad der einfallenden Sonnenstrahlung 3 angeordnete, diese Strahlung absorbierende Oberfläche 14', die derart ausgebildet ist, dass der Absorber 14 sich auf Grund der auf seine Oberfläche 14' einfallenden Sonnenstrahlung 3 betriebsfähig erhitzt und dann über seine Oberfläche 14' entsprechende Schwarzkörperstrahlung (im Wesentlichen Infrarotstrahlung) in den Absorptionsraum 15 abgibt, s. dazu auch die Beschreibung unten. Der Begriff Schwarzkörperstrahlung wird hier verwendet, um die auf Grund seiner Temperatur vom Absorber 14 abgegebene eigene Strahlung zu bezeichnen, im Gegensatz etwa zu von ihm reflektiertem Sonnenlicht 3. Die Temperatur des Absorbers 14 ist durch die Absorption des Sonnenlichts 3 stark erhöht und kann in einem Bereich von beispielsweise 1000 K bis über 2000 K liegen, je nach der Auslegung des Receiver-Reaktors 4 im konkreten Fall, und je nach den verwendeten Materialien. Prinzipbedingt ist aber der Betriebstemperaturbereich des Receiver-Reaktors nach oben nicht begrenzt, sondern hängt von den gewünschten Temperaturen und den verfügbaren Materialien ab. CeO₂ bietet den Vorteil, dass es schon in einem leicht reduzierten Zustand einen hohen Absorptionsgrad aufweist uns sich so durch die solare Strahlung gut beheizen lässt.

Damit gibt der Absorber 14 seine Wärmeleistung in Form von Schwarzkörperstrahlung (Infrarotstrahlung) in den Absorberraum 15 ab, soweit diese nicht für die endotherme Reaktion der Reduktion und der Bildung von Syngas während der Oxidation konsumiert wird. Die entsprechend benötigte Energie wird durch die Sonnenstrahlung 3 zugeführt.

Weiter wird als Wärme transportierendes Medium ein Infrarotstrahlung-absorbierendes Gas oder Gasgemisch verwendet, welches die Schwarzkörperstrahlung des Absorbers 4 während seiner Verweilzeit im Erwärmungsbereich 12 absorbiert und sich im Hinblick auf Tₒᵤₜ entsprechend erhitzt. Als infrarot absorbierendes Gas kann ein heteropolares Gas, bevorzugt eines oder ein Gemisch der Gase CO₂, Wasserdampf, CH₄, NH₃, CO, SO₂, SO₃, HCl, NO, und NO₂ verwendet werden.

Bei der Verwendung solcher Gase ergibt sich letztlich ein durch den erfindungsgemässen Receiver-Reaktor nutzbarer bzw. genutzter Treibhauseffekt, da diese Gase für das sichtbare Licht hoch durchsichtig sind, das damit den Absorber im Wesentlichen erreicht, aber für die Infrarotstrahlung des Absorbers wenig bis kaum durchsichtig sind, so dass sie sich also vor dem Absorber absorptiv auf Tₒᵤₜ erwärmen. Es sei hier angemerkt, dass reale Gase sichtbares Licht oder Infrarotstrahlung nicht gleichmässig über alle Frequenzen absorbieren oder für diese durchsichtig sind, sondern vor allem in für ein jeweiliges Gas spezifischen Frequenzbändern unterschiedlich stark. Zusätzlich fällt die Absorption mit dem Abstand von der Strahlungsquelle ab. Dadurch wird oben im Hinblick auf die Absorption bzw. Durchsichtigkeit von Strahlung von "hoch durchsichtig" bzw. von "wenig bis kaum durchsichtig" gesprochen.

Ein bestimmender Parameter ist damit die Absorptivität *α* des Wärme transportierenden Gases, die durch Versuche gemessen, aus Spektrallinienwerten von molekülspektroskopischen Datenbanken (z.B. HITEMP2010) berechnet, oder auch näherungsweise aus Emissivitätsdiagrammen nach der Regel von Hottel bestimmt werden kann.

Es sei an dieser Stelle angemerkt, dass natürlich das Sonnenlicht neben dem sichtbaren Licht, das keine infrarote Frequenzen aufweist, auch solche infraroten Frequenzen besitzt. Diese werden dann erfindungsgemäss direkt durch das Wärme transportierende Fluid im Absorptionsraum absorbiert, deren Energie also im Wesentlichen ohne Verluste genutzt, da die Rückstrahlung durch das nachströmende Fluid wiederum absorbiert wird.

Schliesslich wird neben der Verwendung eines infrarot absorbierenden Gases oder Gasgemischs der Absorbtionsraum 15 derart ausgebildet und der Massenstrom des Wärme transportierenden Mediums derart festgelegt, dass bevorzugt im Wesentlichen die gesamte Schwarzkörperstrahlung des Absorbers 14 vom Wärme transportierenden Medium absorbiert, d.h. dass die Rückstrahlung des Absorbers 14 durch die Öffnung 13 im Wesentlichen durch das Gas absorbiert wird.

Bei der Rückstrahlung des Absorbers 14 handelt es sich um seine Schwarzkörperstrahlung, welche auf einem durch die Öffnung 13 verlaufenden Pfad liegt und damit - wenn nicht absorbiert - in die Umgebung abgestrahlt wird und so den Wirkungsgrad des Receiver-Reaktors herabsetzt. Erfindungsgemäss wird nun in Kombination mit dem als Reaktor ausgebildeten Absorber eine spezielle Zone, der Absorptionsraum 15, geschaffen um diese Wirkungsgradverluste im Rahmen der für einen Receiver-Reaktor überhaupt möglichen Geometrie zu beseitigen. Der durch die Öffnung verlaufende Pfad muss nicht auf einer Geraden liegen, sondern umfasst auch von den Wänden des Absorptionsraums reflektierte Schwarzkörperstrahlung des Absorbers 14.

Eine erfindungsgemäss absorbierte Rückstrahlung des Absorbers 14 setzt voraus, dass einerseits der Absorptionsraum 15 lang genug ist, und andererseits, dass der Massenstrom des Wärme transportierenden Fluids genügt, um im Absorptionsraum 15 ein Temperaturprofil derart aufrecht zu erhalten, dass die Temperatur am Ort der Öffnung nur unwesentlich über Tᵢₙ liegt, was beispielsweise bei einem Stillstand des Wärme transportierenden Fluids nach einer Zeitspanne nicht mehr der Fall wäre.

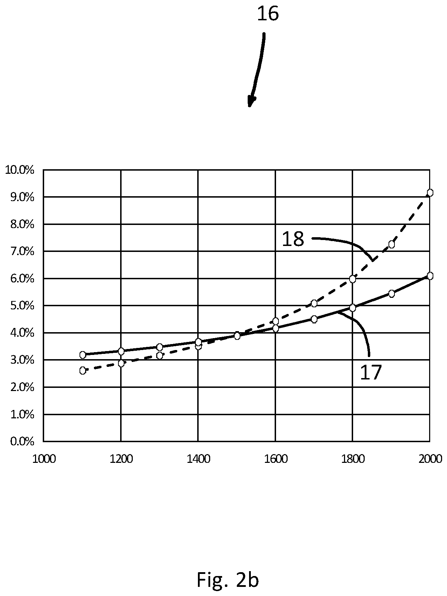

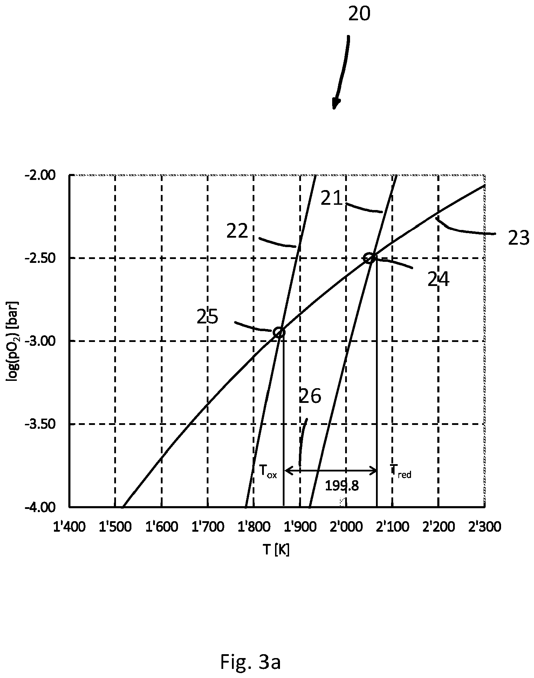

Figur 2b zeigt ein Diagramm 16, bei welchem auf der horizontalen Achse die Auslasstemperatur Tₒᵤₜ des Wärme transportierenden Gases und auf der vertikalen Achse der Anteil der aus der Öffnung 13 austretenden Schwarzkörperstrahlung des Absorbers 14, d.h. der unerwünschten Rückstrahlung. Weist die Öffnung 13 ein Fenster z.B. aus Quarzglas auf, wird die Rückstrahlung durch die Kurve 17 angegeben, ohne Fenster durch die Kurve 18. Die Kurven 17 und 18 sind das Ergebnis einer Simulation, s. dazu die Beschreibung unten zu den Figuren 3a bis 3c, d.h. sie gelten für einen Absorptionsraum 15 mit einem Durchmesser und einer Höhe von je 15,95 m, wie er für ein Heliostatenfeld geeignet sein könnte.

Je nach dem konkreten Fall kann der Fachmann die Geometrie des Absorberraums festlegen, so dass die verbleibende Rückstrahlung im Wesentlichen unterbleibt (was jedoch unter Umständen zu einem unter anderen Gesichtspunkten nachteilig langen Absorptionsraum führen könnte) oder etwas erhöht ausfällt, wenn eine besonders kompakte Ausführung erwünscht ist, wobei dann immer noch 80% oder mehr, oder 90% oder mehr der Schwarzkörperstrahlung des Absorbers absorbiert werden kann.

Es ergibt sich, dass bevorzugt das Wärme transportierendes Fluid so zusammengesetzt und die Transporteinrichtung sowie der Absorberraum derart ausgebildet sind, dass im Betrieb des Reaktors das Wärme transportierende Fluid ≥ 80%, bevorzugt ≥ 90% und ganz bevorzugt ≥ 94 % der Schwarzkörperstrahlung des Absorbers absorbiert, die auf einem Pfad durch die Öffnung für die Strahlung der Sonne liegt.

Aus dieser Verwendung eines infrarot absorbierenden Gases ergeben sich drei Vorteile:
Erstens werden erfindungsgemäss Strahlungsverluste durch Rückstrahlung der Schwarzkörperstrahlung aus der optischen Öffnung hinaus überwiegend oder im Wesentlichen vollständig vermieden. Diese Rückstrahlung vermindert den Wirkungsgrad eines konventionellen Receivers (und damit eines Receiver-Reaktors) spürbar.

Zweitens wird wird die Wärme der Schwarzkörperstrahlung des Absorbers direkt im Wärme transportierenden Fluid nutzbar und steht für eine flexible Nutzung bereit, s. dazu auch die Beschreibung unten.

Drittens muss für die Erwärmung des Wärme transportierenden Mediums auf Tₒᵤₜ weder ein konstruktiver Aufwand getrieben, noch entsprechende Strömungsverluste in Kauf genommen werden, wie dies bei konventionellen, überwiegend über die Konvektion arbeitenden Receivern der Fall ist. Die diesbezüglichen Probleme bei volumetrischen Receivern mit räumlich ausgebildeten Absorbern komplizierter Struktur (Konstruktionsaufwand, Strömungsverluste) entfallen. Dies gilt insbesondere im Hinblick auf den Absorptionsraum, da für möglichst intensive Schwarzkörper-Strahlung in den Absorptionsraum hohe Temperaturen des Absorbers, aber auch der Seitenwände des Absorptionsraums vorteilhaft sind, so dass dort Kühlmittel aller Art entfallen, insbesondere Kühlkanäle, wie dies bei Receivern gemäss dem Stand der Technik vorgesehen ist - entweder Kühlkanäle in den Wänden, oder auch die maximale Konvektion sicherstellenden Kühlkanäle im Absorber

Bevorzugt sind deshalb die Wände des Absorptionsraums 15 und/oder der Absorber 14 frei von im Normalbetrieb aktivierten Kühlmitteln irgendwelcher Art, insbesondere frei von Kühlkanälen. Natürlich können aber auch erfindungsgemäss immer an jeder Stelle des Receiver-Reaktors Notkühlmittel für einen ausserordentlichen Betriebszustand vorgesehen werden, um diesem vor einem verbotenen Betriebszustand zu schützen.

Zwar ist es so, dass das im Bereich der optischen Öffnung 13 vorhandene Wärme transportierende Medium die Temperatur Tᵢₙ aufweist und damit eine eigene Schwarzkörperstrahlung durch die optische Öffnung hinaus erzeugt. Diese Rückstrahlung ist jedoch gegenüber derjenigen des Absorbers 14 von untergeordneter Bedeutung, da die Schwarzkörperstrahlung mit der 4. Potenz der Temperatur steigt, somit die Schwarzkörperstrahlung des Absorbers 14 durch die optische Öffnung hindurch relevant höhere Strahlungsverluste erzeugen würde, was jedoch erfindungsgemäss nicht der Fall ist.

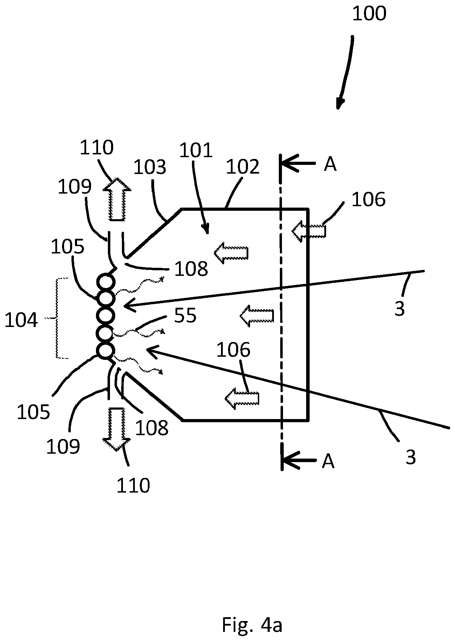

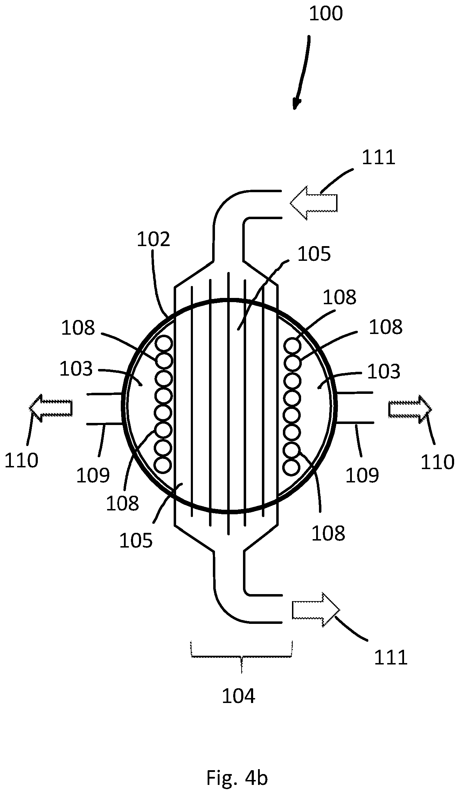

Bei der in Figur 2a dargestellten Ausführungsform durchströmt das Wärme transportierende Fluid den Absorber 14, so dass es sich nach der absorptiven Erwärmung im Absorptionsraum 15 ebenfalls etwas konvektiv erwärmt. Es ergibt sich, dass bevorzugt der Absorber für die Durchströmung von Wärme transportierendem Fluid ausgebildet ist und die Oberfläche des durchströmten Bereichs dann weiter bevorzugt wenigstens teilweise aus reduzierbarem/oxidierbarem Material besteht. Damit wird bei der gezeigten Ausführungsform das absorbierende Gas während dem Reduktionsprozess und während dem Oxidationsprozess durch den Absorber hindurchgeführt, bevorzugt derart, dass es sich dort auch konvektiv erwärmt. Diese Anordnung hat den Vorteil, dass einerseits wie erwähnt eine Rückstrahlung des Absorbers 14 durch die Öffnung 13 unterbleibt und andererseits der Absorber 14 soweit für einen konvektiven Wärmeübergang an das Wärme transportierende Medium ausgelegt werden kann, dass er leicht über den Massenstrom des Wärme transportierenden Mediums von der oberen Reduktionstemperatur T_{red} auf die untere Oxidationstemperatur Tₒₓ gekühlt werden kann (s. dazu die Beschreibung unten) - wobei aber der Absorber 14 immer noch einfach und mit geringen Strömungsverlusten ausgebildet werden kann. In einer nicht in der Figur dargestellten Ausführungsform kann der Fachmann für den konkreten Fall auch vorsehen, das Wärme transportierende Fluid für die Oxidation (d.h. in der Phase des Redox-Zyklus während dem Abfall der Absorbertemperatur) unter Konvektion durch den Absorber zu leiten und für die Reduktion (d.h. in der Phase des Redox-Zyklus während dem Anstieg der Absorbertemperatur) am Absorber vorbei, beispielsweise durch Auslassleitungen 51‴ gemäss Figur 4). Dann kühlt sich der Absorber für die Oxidation erleichtert ab und erwärmt sich entsprechend erleichtert im Hinblick auf die Reduktionstemperatur.

Damit besitzt das Wärme transportierende Fluid an den Eingangsstutzen 17 die Temperatur Tᵢₙ, nach der Absorptiven Erwärmung im Absorptionsraum 15 die Temperatur Tₒᵤₜ und nach dem Ausgangsstutzen die etwas höhere Temperatur Tₒ.

Mit anderen Worten ist es so, dass bei der in der Figur 2a gezeigten Anordnung das reduzierende/oxidierende Material an der dem Absorptionsraum zugewendeten Seite angeordnet ist, so dass der Absorptionsraum zugleich zum Reaktorraum wird, in dem die Redox-Reaktion abläuft. Es ergibt sich, dass bevorzugt als infrarot absorbierendes Gas ein wenigstens oxidierendes Gas, bevorzugt Wasserdampf oder CO₂ verwendet wird, welches durch die Absorptionskammer hindurch zum Absorber geleitet wird, derart, dass es in der Absorptionskammer an der Redox-Reaktion teilnimmt und durch den Absorber in der Oxidationsphase reduziert wird. Dann wird gemäss der Beschreibung zu Figur 1a oben, bevorzugt das wenigstens oxidierende Gas stromabwärts nach dem Absorber in eine Trennstation geleitet und in dieser Syngas aus ihm abgetrennt wird, wobei weiter bevorzugt das oxidierende Gas im Kreislauf zur Absorberkammer zurückgeführt, und dabei in diesem Kreislauf in Strömungsrichtung vor dem Absorber in einem Wärmetauscher gekühlt wird.

Weiter können, wie oben beschrieben, auch die Durchströmöffnungen des Absorbers mit dem reduzierbaren/oxidierbaren Material versehen sein, und, je nach dem konkreten Fall, die Rückseite des Absorbers, so dass der Bereich hinter dem Absorber bis zum Auslassstutzen zum Reaktionsraum wird.

Der oben beschriebenen Oxidationsphase des Redox-Reaktors geht notwendigerweise die Reduktionsphase voraus, welche ihrerseits begünstigt wird, wenn ein infrarot absorbierendes Gas verwendet wird, das einen geringen Sauerstoffpartialdruck aufweist, da dann die Reduktion des Redox-Reaktors bei einer jeweiligen Temperatur stärker erfolgt, was wiederum den Wirkungsgrad der Anordnung erhöht. Bevorzugte, während wenigstens der Reduktionsphase des Redox-Reaktors verwendete infrarot absorbierende Gase sind Wasserdampf und CO₂, bzw. andere Gase oder Gasgemische, deren Sauerstoffpartialdruck gleich oder kleiner ist als derjenige von Wasserdampf oder CO₂ bei den für die Reduktion vorgesehen Temperaturen. Es ergibt sich bevorzugt, dass als infrarot absorbierendes Gas ein Gas mit einem Sauerstoffpartialdruck bei einer während der Reduktionsphase des Redox-Reaktors herrschenden Temperatur von gleich oder weniger als dem höheren Wert des Sauerstoffpartialdrucks von Wasserdampf oder CO₂ bei dieser Temperatur verwendet wird, und wobei dieses Gas wenigstens während der Reduktionsphase (durch die Kreislauf-Leitungsanordnung) durch die Absorptionskammer hindurch zum Absorber geleitet wird, derart, dass der Absorbder dieser in der Reduktionsphase in Gegenwart dieses Gases reduziert wird. Damit erfolgt die Reduktion erleichtert aufgrund des tiefen Sauerstoffpartialdrucks ab, d.h. für einen bestimmten Reduktionsgrad bei einer tieferen Temperatur als dies bei einem Gas mit höherem Sauerstoffpartialdruck der Fall wäre.

Diesen Ausführungsformen ist gemeinsam, dass das Wärme transportierendes Fluid ein während der Oxidation des Absorbers reduzierbares Gas ist, wobei das reduzierbare/oxidierbare Material des Absorbers an diesem derart angeordnet ist, dass es betriebsfähig im Strömungsweg des Wärme transportierendes Fluid liegt, so dass es in der Oxidationsphase des Redox-Reaktors reduziert wird.

Anhand der aus Simulationen der Anmelderin gebildeten Diagramme in den Figuren 3a bis 3c wird der Betrieb des erfindungsgemässen Receiver-Reaktors am Beispiel einer Ausführungsform gemäss Figur 2 näher beschrieben.

Der Simulation liegen die folgenden Daten zu Grunde:
Länge und Durchmesser der Absorptionskammer 15 betragen je 15,96 m. Damit ist eine genügende Länge der Absorptionskammer für die nahezu vollständige Absorption der Schwarzköprerstrahlung des Absorbers vorhanden,. Der Absorber kann dann beispielsweise als einfache Platte ausgebildet werden, so dass der Receiver-Reaktor als konstruktive low-cost Lösung einfach hergestellt werden kann. Dann weist bevorzugt die in den Absorptionsraum strahlende Oberfläche des Absorbers ein reduzierbares/oxidierbares Material auf.

Der Durchmesser der optischen Öffnung 13 beträgt 11,28 m, die damit geeignet ist, die Strahlung des Felds der Heliostaten 2 (Figur 1) aufzunehmen, jedoch mit einer Fläche von 100 m² nur halb so gross ist wie der Absorber 14 mit 200 m², so dass auch die Rückstrahlung des Wärme transportierenden Fluids mit der Temperatur Tᵢₙ entsprechend reduziert ist.

Der Absorber 14 besteht aus CeO₂, das Gewicht des Receivers-Reaktors ist 144 t. Der Strahlungsfluss durch die optische Öffnung 13 beträgt 1'200 kW/m² und an der absorbierenden Oberfläche 14' 600 kW/m² (welche gegenüber der Öffnung 13 die doppelte Fläche aufweist.

Als Wärme transportierendes und Infrarot-absorbierendes Fluid wird Wasserdampf verwendet, wobei dessen Temperatur Tᵢₙ 1000 K beträgt. Diese Temperatur ist beispielhaft für einen dem Receiver-Reaktor zugeordneten industriellen Prozess, der bei beispielsweise 900 K abläuft, s. den Verbraucher 7 von Figur 1. Die Temperatur Tₒᵤₜ des Wasserdampfs am Absorber beträgt 1800 K im Hinblick auf die für die Redox-Reaktion benötigte obere Reduktionstemperatur T_{red} des Absorbers 14 (s. dazu auch die Beschreibung unten, zu Figur 3a).

Die Redox-Reaktion am Reaktor läuft grundsätzlich so ab, dass der Absorber 14 mit steigender Temperatur zunehmend reduziert wird (d.h. er verliert Sauerstoff), wobei das Mass der Reduktion von der Temperatur des Absorbers 14 und dem dort herrschenden Sauerstoffpartialdruck abhängt. Für die Reduktion gilt die Gleichung CeO(2-δₒₓ) -> CeO(2-δ_{red}) + (δ_{red}-δₒₓ)O, da der Absorber 14 den Sauerstoff nicht stöchiometrisch abgibt. Die Reduktion könnte grundsätzlich im Vakuum ablaufen, hier jedoch in Gegenwart von Wasserdampf, welcher die Rückstrahlung des Absorbers 14 durch die optische Öffnung 13 verhindert und den Sauerstoff (δ_{red}-δₒₓ)O mit sich aus dem Reaktor-Receiver abführt, beispielsweise zu der Trennstation 9.

Mit fallender Temperatur wird der Absorber 14 zunehmend oxidiert (d.h. er nimmt Sauerstoff auf), wobei das Mass der Oxidation wiederum von der Temperatur des Absorbers 14 und dem dort herrschenden Sauerstoffpartialdruck abhängt. Sauerstofflieferant ist das Wärme transportierende Fluid, d.h. hier der Wasserdampf (der bei der Reduktion frei gewordene Sauerstoff ist aus dem Receiver-Reaktor abtransportiert worden). Für die Oxidation gilt die Gleichung CeO(2-δ_{red}) + (δ_{red}-δₒₓ) H2O -> CeO(2-δₒₓ) + (δ_{red}-δₒₓ) H₂, da der Absorber 14 den Sauerstoff nicht stöchiometrisch aufnimmt. Im Ergebnis hat sich H₂, d.h. Wasserstoff gebildet, der wiederum vom Wärme transportierenden Fluid zur Trennstation 9 (Figur 1) abgeführt, dort abgetrennt und als Syngas bereitgestellt wird.

Dabei bezeichnet das nicht stöchiometrische δ die Menge des jeweils vom CeO₂ verlorenen Sauerstoffs, also den jeweiligen "Reduktions-" bzw. "Oxidationszustand" welcher, wie erwähnt, vom Sauerstoffpartialdruck und der Temperatur abhängt. Unter dem Aspekt eines konkreten Redoxprozesses liegt ein Reduktionszustand bei einem grösseren δ und ein Oxidationszustand bei einem kleineren δ vor.

Figur 3a zeigt ein Diagramm 20 für den Betrieb des Receiver-Reaktors 1 mit den oben angegebenen Daten. Auf der senkrechten Achse ist der Sauerstoffpartialdruck logarithmisch aufgetragen, auf der horizontalen Achse die Temperatur des ein reduzierbares/oxidierbares Material aufweisenden Absorbers 14, der hier aus CeO₂ besteht.

Für eine Ausführungsform des Redox-Prozesses in einem erfindungsgemässen Receiver-Reaktor wird eine genügende Reduktion des Ceriumoxids (CeO₂) von Δδ = δ_{red}-δₒₓ = 0.06 angenommen, wobei dann δₒₓ = 0,04 und δ_{red} = 0,1 ist. Die Kurve 21 zeigt, wann in Abhängigkeit von Temperatur und Sauerstoffpartialdruck δ_{red} = 0,1 beträgt. Die Kurve 22 zeigt, wann in Abhängigkeit von Temperatur und Sauerstoffpartialdruck δₒₓ = 0,04 vorliegt. Die Kurve 23 zeigt den Sauerstoffpartialdruck von Wasserdampf wiederum in Abhängigkeit der Temperatur.

Der Schinttpunkt 24 der Kurven 21 (δ_{red} = 0,1) und 23 (Wasserdampf) bestimmt die obere Absorbertemperatur T_{red} für die Reduktion, der Schnittpunkt 25 der Kurven 22 (δₒₓ = 0,04) und 23 (Wasserdampf) die untere Absorbertemperatur Tₒₓ für die Oxidation. Damit zeigt der Pfeil 26 das am Absorber 14 abzufahrende Temperaturintervall für den gewünschten Redox-Prozess, der hier Wasserstoff generiert. Vorteilhafterweise ist dieses Intervall klein, ca. 200 K, da mit der erfindungsgemässen Anordnung ohne Weiteres hohe Betriebstemperaturen gefahren werden können. Es sei hier angemerkt, dass dieses Intervall bei noch höheren Temperaturen zunehmend kleiner wird. Konstruktionsbedingt ist der erfindungsgemässe Receiver-Reaktor grundsätzlich geeignet, in so hohen Temperaturbereichen gefahren zu werden, wie die Temperaturbeständigkeit der vom Fachmann im konkreten Fall ausgewählten Materialien dies zulässt.

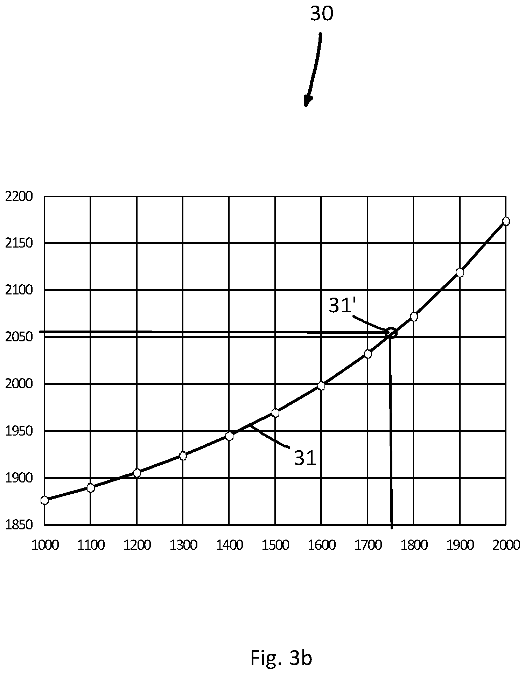

Figur 3b zeigt ein Diagramm 30 für Steigerung der Temperatur des Absorbers 14 auf die obere Reduktionstemperatur T_{red} . Auf der horizontalen Achse ist die Temperatur Tₒᵤₜ des Wärme transportierenden Fluids, auf der vertikalen Achse die damit erreichbare Temperatur des Absorbers 14 abgetragen. Es sei an dieser Stelle angemerkt, dass die erreichbare Temperatur des Absorbers nur leicht abhängig ist von Tₒᵤₜ des Wärme transportierenden Fluid, was eine flexible Abstimmung von Tₒᵤₜ auf den externen Verbraucher (d.h. eine Anpassung von Tₒᵤₜ an die Bedürfnisse des Verbrauchers) zulässt, wobei sich dann die Temperatur des Absorbers/Reaktors nur in wesentlich kleinerem Mass ändert als Tₒᵤₜ. Damit kann eine gewünschte Reaktoraktivität aufrecht erhalten bleiben, auch wenn Tₒᵤₜ nachfragegemäss schwankt.

Im vorliegenden Ausführungsbeispiel beträgt die Eingangstemperatur Tᵢₙ des Wasserdampfs in den Reaktor-Receiver 4 1000 K, s. oben. Die Ausgangstemperatur Tₒᵤₜ lässt sich über den Massenstrom des Wärme transportierenden Fluids durch den Absorptionsraum 15 hindurch steuern. Damit zeigt die Kurve 31 über den Punkt 31', dass die obere Temperatur T_{red} für die Reduktion des Absorbers 14, hier 2058 K (s. das Diagramm 20, Figur 3a), bei einer Temperatur des Wasserdampfs von Tₒᵤₜ von ca 1750 K erreicht wird. Da das Diagramm einen erst nach langer Zeit erreichten Gleichgewichtszustand zeigt, wird eine Temperatur Tₒᵤₜ von ca 1800 K vorgesehen, um eine industriell verwertbare Zykluszeit zu erreichen.

Es sei an dieser Stelle angemerkt, dass für die Senkung der Absorbertemperatur auf Tₒₓ eine Erhöhung des Massenstroms genügt, worauf die konvektive Kühlung des Absorbers durch das Wärme transportierende Fluid einsetzt, dabei die absorptive Erwärmung entsprechend sinkt, so dass über die leicht vergrösserte konvektive Kühlung die untere Temperatur Tₒₓ erreicht wird, ohne dass das Wärme transportierende Fluid die Temperatur von Tₒᵤₜ = ca 1800 K erreichen muss.

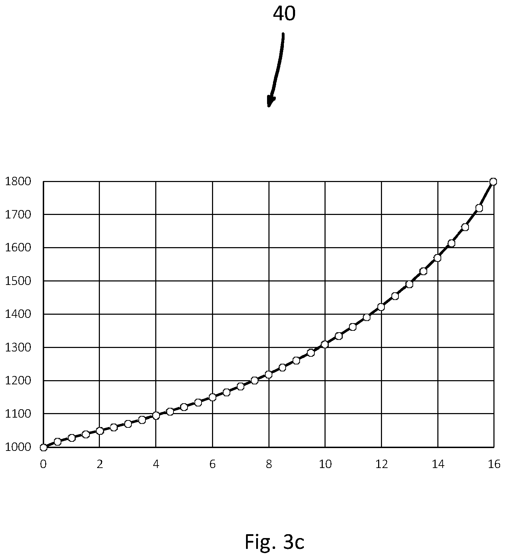

Figur 3c schliesslich zeigt ein Diagramm 40, auf dessen horizontaler Achse die Höhe des Receiver-Reaktors 4 aufgetragen ist (der Nullpunkt befindet sich in der optischen Öffnung 13, die maximale Höhe von 15,95 m beim Absorber 14). Auf der vertikalen Achse ist die Temperatur des den Absorptionsraum 15 von der Öffnung 13 bis zum Absorber 14 durchströmenden Wärme transportierenden Fluids (hier Wasserdampf) aufgetragen. Die Kurve 41 zeigt nun die Temperaturabnahme des Wasserdampfs von 1800 K am Ort des Absorbers 14 rückwärts (entgegen der Richtung des Massenstroms) bis zur Öffnung 13, wo die Temperatur bei 1000 K, d.h. bei Tᵢₙ liegt. Mit anderen Worten ist es so, dass die Schwarzkörperstrahlung des Absorbers 14 im Fall einer Ausgangstemperatur des Wasserdampfs von 1800 K (obere Reduktionstemperatur T_{red}) überwiegend absorbiert ist, d.h. die entsprechenden Wärmeverluste unterbunden sind, s.dazu auch das Diagramm 16 von Figur 2b. Diese Absorptionsrate gilt natürlich auch dann, wenn die Temperatur am Absorber weniger als 1800 K beträgt, was der Fall ist, wenn die Absorbertemperatur gegen die Oxidationstemperatur hin gesenkt wird.

Mit anderen Worten zeigen die Figuren 3a bis 3c einen proof of concept der oben erwähnten Vorteile des erfindungsgemässen Reaktor-Receivers.

Es ergibt sich zusammenfassend ein Verfahren zur Herstellung von Syngas mit Hilfe von Sonnenstrahlung, bei welchem der Reaktor eines Receiver-Reaktors über eine in diesem vorgesehene Öffnung für Sonnenstrahlung durch die Sonnenstrahlung periodisch für einen Reduktionsprozess bis auf eine obere Reduktionstemperatur erwärmt und danach für einen Oxidationsprozess in Gegenwart eines Oxidationsgases bis auf eine untere Oxidationstemperatur gekühlt wird, wobei das Sonnenlicht durch eine Absorptionskammer hindurch auf einen als Reaktor ausgebildeten Absorber geführt wird, der ein reduzierbares/oxidierbares Material aufweist, und wobei ein die Schwarzkörperstrahlung des Absorbers absorbierendes Gas durch die Absorptionskammer geleitet und diese derart ausgebildet wird, dass 80% oder mehr der auf einem Pfad zur Öffnung liegenden Schwarzkörperstrahlung (die Rückstrahlung des Absorbers) durch das Gas absorbiert wird.

Es ergibt sich weiter ein Solarer Receiver-Reaktor mit einer Öffnung für die Strahlung der Sonne, einem im Pfad des einfallenden Lichts angerordneten Absorber, einem Reaktor für eine Redox-Reaktion und einer Transportanordnung in welcher ein an der Redox-Reaktion teilnehmendes Gas betriebsfähig zum Reaktor und von diesem weg geführt wird, wobei der Absorber als Reaktor ausgebildet ist, zwischen der Öffnung für die Strahlung der Sonne und dem Absorber im Pfad des einfallenden Lichts und von Schwarzkörperstrahlung des Absorbers eine Absorber-kammer angeordnet ist, und dass die Transportanordnung eine Kreislauf - Leitungsanordnung aufweist, in welchem ein Wärme transportierendes Fluid zirkuliert, wobei der Kreislauf derart ausgebildet ist, dass das Wärme transportierende Fluid in der Absorberkammer mit Wärme beladen und im Wärmetauscher wieder abgekühlt werden kann, wobei das Wärme transportierende Fluid ein IR Gas ist, welches die auf einem Pfad durch die Öffnung laufenden Schwarzkörper-Strahlung des Absorbers absorbiert.

Es ergibt sich zudem, Solarer Receiver-Reaktor mit einer Öffnung für die Strahlung der Sonne, einem im Pfad des einfallenden Lichts angerordneten Absorber und einer Transportanordnung für Wärme transportierendes Fluid, das den Absorber kühlt, ist dabei derart ausgebildet, dass im Pfad des Lichts vor dem Absorber ein Absorptionsraum vorgesehen und die Transportanordnung weiter ausgebildet ist, das Wärme transportierende Fluid durch den Absorptionsraum zu führen, derart, dass es durch die Schwarzkörperstrahlung des Absorbers erwärmt wird, wobei der Absorber ein reduzierbares/oxidierbares Material für einen Rduktions- und einen Oxidationsprozess und das Wärme transportierende Fluid ein in den Frequenzbändern des Infrarotbereichs absorbierendes Gas aufweist, das so zusammengesetzt und die Transporteinrichtung sowie der Absorberraum derart ausgebildet sind, dass im Betrieb des Reaktors das Wärme transportierende Fluid die Rückstrahlung des Absorbers durch die Öffnung im Wesentlichen absorbiert, und wobei der Reciever-Reaktor derart ausgebildet ist, dass die Temperatur des reduzierbaren/oxidierbaren Materials des Absorbers wechselweise zwischen einer oberen Temperatur T_{red} und einer unteren Temperatur Tₒₓ hin- und her gebracht werden kann.

Figur 4a zeigt schematisch eine weitere Ausführungsform des erfindungsgemässen Receiver-Reaktors 100 in einem Längsschnitt durch einen Durchmesser des Absorptionsraums 101, der einen in Richtung des Sonnenlichts vorderen, zylindrischen Abschnitt 102 und einen hinteren, konischen Abschnitt 103 aufweist. Ein Absorber 104 besteht aus wenigstens einer, bevorzugt aus einem Bündel Leitungen 105, an deren Innenwand ein reduzierbares/oxidierbares Material angeordnet ist. Diese Leitungen 105 führen ein an der chemischen, hier der Redox-Reaktion, teilnehmendes Gas - also ein wenigstens oxidierendes Gas, welches bei der Oxidation des Absorbers (bzw. dessen innerer Beschichtung) O - Atome verliert und so (teilweise) zum Syngas reduziert wird. Die Sonnenstrahlung erwärmt den Absorber 101, der wiederum seine Schwarzkörperstrahlung in den Absorptionsraum 101 abgibt, wobei das durch diesen hindurchströmende Infrarot absorbierende Gas (Pfeile 106) diese Strahlung wie oben beschrieben absorbiert und sich dabei erwärmt.

Es sei an dieser Stelle angemerkt, dass das wenigstens oxidierende Gas auch während der Reduktionsphase verwendet werden kann, dann O - Atome aufnimmt und wegtransportiert, folglich eine entsprechende Trennstation vorgesehen werden muss, um die O - Atome vor der Oxidation des Absorbers aus diesem zu entfernen, da sonst in der späteren Oxidationsphase kein Syngas gebildet würde. Alternativ ist es grundsätzlich auch möglich, für die Oxidation und für die Reduktion verschiedene Gase zu verwenden, was im konkreten Fall vorteilhaft sein kann. Des Weiteren ist es möglich, die Reduktion unter Vakuum durchzuführen, sodass der bei der Reduktion freigesetzte Sauerstoff in reiner Form vorliegt und somit keine Separation von einem Gasstrom nötig ist. Zudem kann durch das Verringern des Sauerstoffpartialdruckes während der Reduktionsphase bei einer gegebenen Reduktionstemperatur T_{red} der Reduktionsgrad δ_{red} erhöht werden, womit in der anschliessenden Oxidationsphase mehr Syngas produziert und so die Effizienz des Redox-Prozesses gesteigert werden können.

Es ergibt sich, dass bevorzugt der Absorber als Abschnitt der weiteren Leitungsanordnung ausgebildet ist und wenigstens eine Leitung für das wenigstens oxidierende Gas aufweist, an deren Innenwand reduzierbares/oxidierbares Material angeordnet ist. Weiter bevorzugt ist der Absorber als Leitungsbündel für wenigstens oxidierendes Gas ausgebildet.

Das Ende des Receiver-Reaktors 100, in welchem das Infrarot absorbierende Gas eintritt, kann gleich ausgebildet sein, wie dasjenige des Receiver-Reaktors 4 (Figur 2). Das Ende des Receiver-Reaktors 100, welches den Absorber 104 aufweist, ist hingegen wie oben beschrieben modifiziert, wobei der Absorber 104 als Bündel von Leitungen 105 ausgebildet ist. Dies erlaubt, das an der Redox-Reaktion teilnehmende Gas vom Wärme transportierenden Fluid zu trennen, wobei dann nicht mehr der Absorptionsraum 15 (Figur2) der Reaktionsraum für die Redox-Reaktion ist, sondern das Innere der Leitungen 105.

Das Wärme transportierende Fluid tritt seitlich über Öffnungen 108 aus (Pfeile 110), gelangt in einen Sammler 109 und wird schliesslich in der Leitung 8 zum Wärmetauscher 7 (Figur 1b) geführt, dann von diesem im Kreislauf zurück zum Reaktor-Receiver 100. Alternativ könnte das Wärme transportierende Fluid beispielsweise während der Oxidation auch zwischen den Leitungen 105 des Absorbers 104 hindurchgeleitet werden, um den Absorber zusätzlich konvektiv auf eine untere Oxidationstemperatur Tₒₓ zu kühlen, und dann über einen hier nicht dargestellten Sammler in die Leitung 8 eingeführt werden.

Das an der Redox-Reaktion teilnehmende Gas wird gemäss Figur 1b über die dort dargestellten Leitungen 10, 10' zwischen dem Absorber 100 und der Verfahrensstation 11) hin- und her transportiert.

Figur 4b zeigt schematisch die Ausführungsform des erfindungsgemässen Receiver-Reaktors 100 von Figur 4a in einer Ansicht von oben, entsprechend der Blickrichtung A-A von Figur 4a. Ersichtlich sind die beidseitig vom Absorber 104 (der aus dem Bündel von Leitungen 105 besteht) angeordneten Reihen von Öffnungen 108 für das Wärme transportierende Fluid, welches über den nur teilweise sichtbaren (weil durch den Abschnitt 103 verdeckten) Sammler 109 in die Leitung 8 (Figur 1b) gelangt. Durch die angeschrägte Ausbildung des unteren Abschnitts 103 des Absorptionsraums 101 sind die Rohre 105 in diesem etwa gleich lang, so dass sich das in ihnen fliessende, an der Redox-Reaktion teilnehmende Gas etwa gleich erwärmt. Seine Strömungsrichtung ist durch die Pfeile 111 angedeutet.

Es ergibt sich, dass bevorzugt das absorbierende Gas nach der Absorption der Schwarzkörperstrahlung des Absorbers als Wärme transportierendes Fluid aus dem Receiver-Reaktor abgeführt wird, ohne dass es an der Redox-Reaktion teilnimmt, und dass vom absorbierenden Gas getrennt ein wenigstens oxidierendes Gas dem Absorber für die Redox-Reaktion zugeführt wird. Weiter wird das wenigstens oxidierende Gas durch den Absorber hindurch geleitet, der bevorzugt durch ein Leitungsbündel für das oxidierende Gas ausgebildet ist. Der Receiver-Reaktor weist dann weiter eine Leitungsanordnung für wenigstens oxidierendes Gas auf, welche dieses getrennt vom absorbierenden Gas und Wärme tauschenden Gas führt.

In einer in den Figuren nicht dargestellten Ausführungsform kann das wenigstens oxidierende Gas der vom Absorptionsraum abgewandten Seite des Absorbers zugeführt werden, wobei der Absorber selbst wiederum als Platte ausgebildet sein kann, dann auf seiner dem Absorptionsraum zugewendeten Seite erwärmt wird, in den Absorptionsraum strahlt und auf der anderen Seite das reduzierbare/oxidierbare Material aufweist, welches mit dem an der Reaktion teilnehmenden Gas reagiert. Bevorzugt ist dann der Absorber der Kreislauf-Leitungsanordnung und auch der weiteren Leitungsanordnung für oxidierendes Gas zugeordnet, und bildet eine Trennwand zwischen dem Strömungspfad des Wärme transportierendes Fluid und demjenigen des oxidierenden Gases.

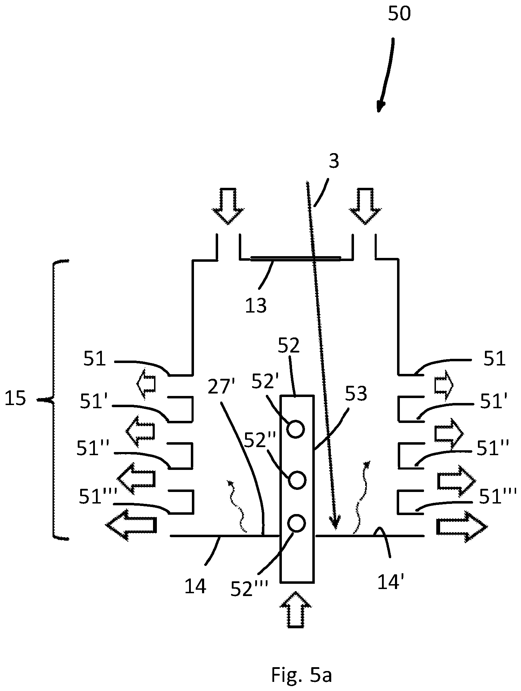

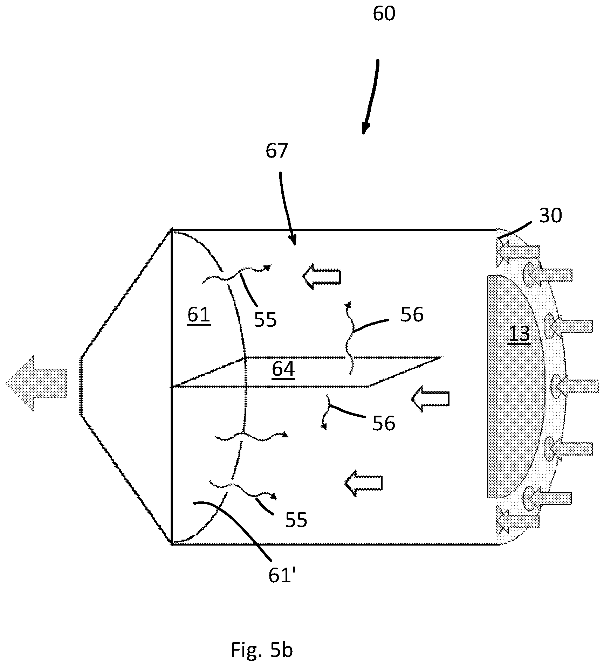

Figur 5a zeigt schematisch einen modifizierten Receiver-Reaktor 50 für die Verwendung von teilerwärmtem Wärme transportierendem Fluid. Schematisch dargestellt ist ein Querschnitt durch eine weitere Ausführungsform eines Receiver-Reaktors 50 in der Art desjenigen von Figur 2 oder von den Figuren 5a und 5b. Die Sonnenstrahlen 3 fallen durch ein Fenster aus beispielsweise Quarzglas 13 auf den Absorber 14, dessen strahlende Oberfläche 14' das im Absorptionsraum 15 durchströmende Gas erhitzt, wobei dessen Temperatur vom Fenster 13 bis zum Absorber 14 hin zunimmt. Entsprechend kann das Gas über Öffnungen 51 bis 51‴ in der zylindrischen Wand des Receivers 50 bei verschiedenen Temperaturen, die grösser sind als Tᵢₙ als teilerwärmtes Wärme transportierendes Medium entnommen werden. Die Pfeile zeigen die Strömungsrichtung des Wärme transportierenden Gases an, wobei die Pfeile bei den Öffnungen 51 bis 51‴ den ansteigenden Temperatur entsprechend länger eingezeichnet sind.

Alternativ - oder zusammen mit den Öffnungen 51 bis 51‴ kann eine in den Absorptionsraum 15 hineinragende Leitung 53 für das Gas vorgesehen werden, welche dann über Öffnungen 52 bis 52‴ Gas bei den am Ort der Öffnungen 52 bis 52‴ herrschenden Temperaturen einspeist, das ebenfalls teilerwärmt ist und eine Temperatur aufweist, die im Innern das Absorptionsraums 15 am Ort der Öffnungen herrscht. Dies ist vor allem dann vorteilhaft, wenn durch den Receiver-Reaktor 50 ein nachgeschalteter, auf verschiedenen Temperaturstufen ablaufender Prozess mit Wärme versorgt wird. Von diesem Prozess kann dann Wärme transportierendes Gas auf ebenfalls verschiedenen Temperaturen zurück zum Receiver geführt werden, so dass weiter bevorzugt im Bereich der Öffnungen 51 bis 51‴ und 52 bis 52‴ weitere Zuleitungen für das Wärme transportierende Gas in den Absorberraum 15 des Receivers 50 hinein vorgesehen werden (die hier zur Entlastung der Figur weggelassen sind).

Es ergibt sich ein Receiver, bei welchem die Transportanordnung eine oder mehrere mit einem Absorberraum 26 verbundene Leitungen 51 bis 51‴ und 52 bis 52‴ für Wärme transportierendes Gas aufweist, die derart angeordnet sind, dass dem Absorberraum 15 teilerwärmtes Gas entnommen und/oder teilerwärmtes Gas an einem Ort zugeführt werden kann, an welchem im Wesentlichen die Temperatur des Gases im Absorberraum 15 der Temperatur des teilerwärmten, zugeführten Gases entspricht.

Solche Zu- und Ableitungen für teilerwärmtes Gas können an einem erfindungsgemässen, absorptiven Receiver-Reaktor vorgesehen werden, ohne dass sein Layout, insbesondere der Absorber 14 modifiziert werden muss - ebenso können diese Leitungen benutzt oder stillgelegt werden, ohne dass es auf Grund des unterschiedlichen Wärmetransfers einer konstruktiven Modifikation bedarf.

Figur 5b zeigt schematisch eine weitere Ausführungsform des erfindungsgemässen Receiver-Reaktors 60. Dargestellt ist ein Schnitt durch einen Receiver-Reaktor 60, der dem Receiver-Reaktor 4 von Figur 2 entspricht, wobei jedoch der Absorber 61 mit seiner der optischen Öffnung 13 zugewendeten absorbierenden Oberfläche 61' einen in den Absorberraum 67 ragenden, bevorzugt plattenförmigen Abschnitt 64 aufweist, der sich in der Mitte des Absorberraums 67 gegen die Öffnung 13 erstreckt und der im Wesentlichen parallel zu der durch die eingezeichneten Pfeile angegebenen Strömungsrichtung des infrarot absorbierenden, Wärme tauschenden Gases ausgerichtet ist. Der Abschnitt 64 absorbiert im Wesentlichen von der absorbierenden Oberfläche 61' abgegebene Schwarzkörper ( Infrarotstrahlung, soweit diese noch nicht von dem an ihm entlang strömenden Gas absorbiert worden ist, also insbesondere Strahlung in denjenigen Frequenzbändern, für welche das Gas weniger absorptiv ist (s. die Beschreibung zu den in realen Gasen wirksamen Frequenzbändern oben). Dadurch erwärmt er sich und stellt wiederum eine Schwarzkörper-Strahlungsanordnung dar, die im Ganzen der Temperatur des Abschnitts 64 entsprechenden Schwarzkörper-Frequenzspektrum strahlt und das vorbeiströmende Wärme transportierende Gas seinerseits absorptiv erwärmt. Es ergibt sich eine verbesserte Nutzung derjenigen Frequenzen der Strahlung 55, welche vom Gas nur wenig absorbiert werden, da diese Frequenzen Wärme in den Abschnitt 64 einbringen, der dann seinerseits wiederum in allen (Infrarot-)Frequenzen strahlt. Der Abschnitt 64 stellt einen Sekundärabsorber dar.

Solch eine Anordnung kann in grösseren Dimensionen, z.B mit einem Durchmesser der Absorberoberfläche 61' von 15,96 m und einer Länge des Absorberraums 67 (Absorberoberfläche 61' bis optische Öffnung 13) von 15,96 m ausgeführt werden. Dann ist der Receiver 60 geeignet, den Fluss einer grossen Anzahl (oder aller) Heliostaten eines Turmkraftwerks aufzunehmen. Es ergibt sich, dass der Receiver 60 einen Absorptionsraum 67 aufweist und der Absorber 61 mit einem Abschnitt bzw. Sekundärabsorber 64 in diesen Raum hinein ragt, der bevorzugt plattenförmig ausgebildet ist. Bevorzugt kann dann der Sekundärabsorber 64 wenigstens teilweise ebenfalls mit einem reduzierbaren/oxidierbaren Material versehen werden, das aber von demjenigen des Absorbers 61 wenigstens teilweise verschieden sein kann, je nach dem Ort auf dem Sekundärabsorber, wo prinzipbedingt nicht dieselben Temperaturverhältnisse vorliegen wie am Absorber 61.

Bei einer weiteren, in der Figur nicht dargestellten Ausführungsform kann eine beispielsweise für das sichtbare Spektrum des Sonnenlichts durchsichtige Glaswand (Quarzglas) als Sekundärabsorber vorgesehen werden, die etwa in der Mitte zwischen der Absorberoberfläche 61' und der optischen Öffnung 13 parallel zur Absorberoberfläche 61' angeordnet ist und Durchgänge, beispielsweise in der Art einer Lochplatte, für das Wärme transportierende Gas aufweist. Wiederum wird die Glaswand durch die Infrarotstrahlung der Absorberoberfläche 61', bzw. durch deren noch nicht vom Gas absorbierten Frequenzanteile erwärmt und strahlt selbst in der Art des schwarzen Körpers in beiden Richtungen, nämlich sowohl gegen die optische Öffnung als auch gegen den Absorber. Es ergibt sich erfindungsgemäss ein Receiver, der einen weiteren als Schwarzkörper - Strahlungsanordnung mit reduzierter Konvektion ausgebildeten Sekundärabsorber in einem vor dem Absorber liegenden Absorptionsraum aufweist, der derart angeordnet und ausgebildet ist, dass er durch die Infrarotstrahlung des Absorbers erwärmbar ist und im Betrieb über seine eigene Strahlung seinerseits in den Absorberraum wirkt, wobei er bevorzugt plattenförmig ausgebildet ist und besonders bevorzugt den Absorber im Wesentlichen nicht beschattet.

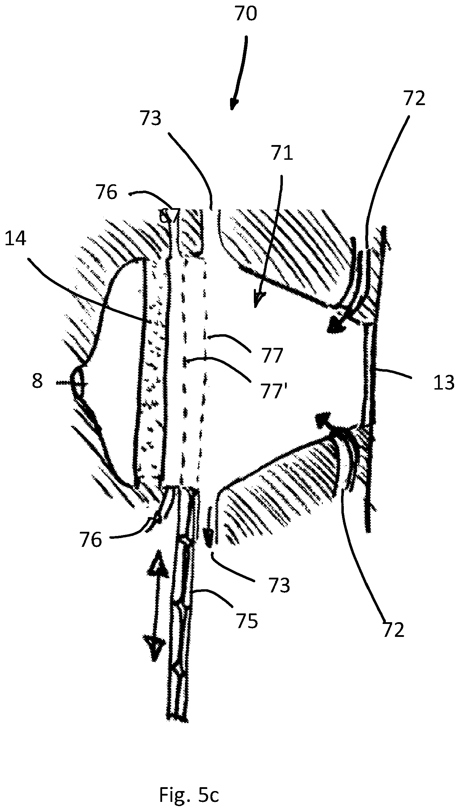

Figur 5c zeigt einen weiteren erfindungsgemässen Reaktor-Receiver 70, mit einer optischen Öffnung 13 und einem Absorber 14, wobei der Absorptionsraum 71 sich im Längsschnitt konisch verjüngt und seitlich mündende Zuleitungen 72 für Wärme transportierendes Fluid vorgesehen sind. Ebenso sind seitlich wegführende Ableitungen 73 für das absorptiv erhitzte Wärme transportierende Fluid vorhanden. Weiter ist ein Schieber 75 vorgesehen, der in seiner in der Figur dargestellten Offenstellung aus dem Absorptionsraum 71 herausgezogen ist und den Fluss der Sonnenstrahlung auf den Absorber 14 sowie dessen Schwarzkörperstrahlung in den Absorptionsraum 71 hinein nicht beeinträchtigt. Diese Konfiguration ist für die Reduktion des Absorbers 14, d.h. in der Phase seiner Erwärmung von Tₒₓ bis zu T_{red}, besonders gut geeignet.

Wird der Schieber 75 in Geschlossenstellung gebracht, die durch die gestrichelten Linien 77 angedeutet ist, ist der Absorber 14 von der Strahlung der Sonne abgeschirmt, was zu einer schnellen Kühlung des Absorbers 14 in der Oxidationsphase, d.h. von T_{red} auf Tₒₓ, führt. Dann kann ein oxidierendes Gas, beispielsweise CO₂, durch die Zuleitungen 76 zum Absorber 14 geführt werden, diesen oxidieren und über den Auslassstutzen 8 zur Trennstation 9 (Figur 1) geführt werden. Dies hat den Vorteil, dass für den Oxidationsbetrieb ein grösserer Teil des Gases durch den Absorber geführt werden kann, dieser somit schneller abkühlt. Weiter ist vorteilhaft, dass dass die Konzentration des Syngases (hier CO) im zur Trennstation geführten Gas hoch ist, so dass die Trennung effizient vorgenommen werden kann. Zusätzlich kann das oxidierende Gas vom für einen externen Verbraucher 7 (Figur 1) bestimmten, Wärme transportierenden Fluid durch die Transportanordnung des erfindungsgemässen Receiver-Reaktors getrennt geführt werden .

Nach erfolgter Oxidation wird der Schieber (der hier eine Strahlungsschranke darstellt) wieder in Offenstellung gebracht. Es ergibt sich, dass bei einer weiteren Ausführungsform eine Strahlungsschranke vorgesehen ist, die wechselweise im Pfad der Sonnenstrahlung vor den Absorber gebracht und von diesem wieder entfernt werden kann.

In einer nicht in den Figuren gezeigten Ausführungsform weist ein Solarkraftwerk wenigstens zwei erfindungsgemässe Reaktoren auf, die im Zyklus der Reduktion und Oxidation gegeneinander versetzt gefahren werden und die Solar-Reflektoren, bevorzugt Heliostaten, jeweils auf den Reaktor gerichtet werden, der sich in der Reduktionsphase befindet, während der andere Reaktor durch die Solar-Reflektoren nicht beleuchtet wird. Dadurch wird, unabhängig vom jeweiligen Redox-Prozess in den Receiver-Reaktoren ein ständiger Strom aus erwärmtem Wärme transportierendem Fluid und Syngas erzeugt, selbst wenn für die Reduktion und die Oxidation verschiedene Gase (beispielsweise für die Reduktion Wasserdampf und für die Oxidation CO₂) verwendet werden.

Natürlich kann für die Reduktion Wasserdampf verwendet werden, der gegenüber dem CO₂ bei den herrschenden hohen Temperaturen einen kleineren Sauerstoffpartialdruck aufweist und deshalb für die Reduktion günstiger ist als CO2, während für die Oxidation CO₂ vorgesehen werden kann, wenn ein Syngasbestandteil CO hergestellt werden soll. Entsprechend kann der erfindungsgemässe Receiver-Reaktor mit verschiedenen Wärme transportierenden Fluiden betrieben werden, je nachdem, wie diese im konkreten Fall für den Reduktions- oder Oxidationsprozess günstig sind. Es ergibt sich, dass als infrarot absorbierendes Gas auch ein oxidierendes Gas, bevorzugt Wasserdampf oder CO2 verwendet werden kann, bzw. dass die Transportanordnung Leitungen für die Zufuhr von verschiedenen Gasen in den Absorberraum aufweist, bevorzugt derart, dass dem Absorberraum (oder auch dem Raum hinter dem Absorber) für einen Reduktionsprozess ein Gas und für einen Oxidationsprozess ein anderes Gas zugeführt wird.

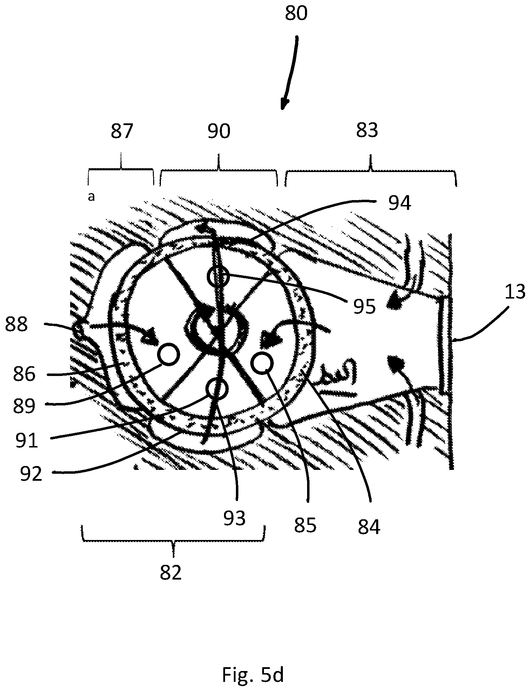

Figur 5d zeigt eine weiteren erfindungsgemässen Reaktor-Receiver 80, mit einer optischen Öffnung 13 und einem Absorber 81 mit einer ringförmigen, aus Segmenten bestehenden Struktur, der in einem Raum 82 für schrittweise Drehung angeordnet ist und diesen vom Absorptionsraum 83 abgrenzt. In den Absorptionsraum 83 münden Zuleitungen für Wärme transportierendes Gas mit der Temperatur Tᵢₙ, welches nach der Absorption der Schwarzkörperstrahlung des Absorbersegments 84 mit der Temperatur Tₒᵤₜ zu diesem und dann durch das Segment 84 hindurch strömt und den Receiver-Reaktor 80 über eine senkrecht zur Zeichnungsebene angeordnete Ableitung 85 verlässt und dann über die Leitung 6 zu einem Verbraucher 7 geführt wird (s. Figur 1a). Das Segment 84 erwärmt sich entsprechend, der Absorber 81 bleibt in dieser Position, bis das Segment 84 die Reduktionstemperatur T_{red} erreicht hat.

Gleichzeitig befindet sich das Segment 86 in einem von der Sonnenstrahlung abgeschirmten Bereich 87 des Raums 82, wobei durch die Zuleitung 88 oxidierendes Gas zugeführt wird, welches durch das auf die Oxidationstemperatur Tₒₓ gekühlte Segment 86 strömt und mit dem Syngas beladen über die Auslassleitung 89 zur Trennstation 9 (Figur 1) gebracht wird. Reduktion und Oxidation finden damit gleichzeitig statt, wobei je nach der Auslegung des Receiver-Reaktors 80 dasselbe Gas oder verschiedene Gase verwendet werden können, dabei aber natürlich im Absorptionsraum 83 ein infrarot absorbierendes Gas, z.B. Wasserdampf vorgesehen ist, während im Raumabschnitt 87 Infrarotabsorption nicht zwingend ist.

Immer noch gleichzeitig wird im Raumabschnitt 90 über die Leitung 91 ein Wärme transportierendes Fluid zugeführt, welches nach aussen, durch das Segment 92 des Absorbers 81 hindurch strömt, dabei diesen kühlt, sich dabei erwärmt und über den symbolisch als Pfeil angedeuteten Überströmkanal 93 auf die Aussenseite des Segments 94 gelangt, diesen von aussen nach innen durchströmt, dabei diesen erwärmt und selbst abgekühlt wird und schliesslich über die Leitung 95 den Raum 90 verlässt. Die Leitungen 91 und 93 sind hinter dem Raum 82 zusammengeschaltet, so dass sich ein Kreislauf von Wärme transportierendem Fluid durch die Segmente 92 und 94 hindurch ergibt. Dieser Kreislauf dient der Rekuperation der Wärme aus der Kühlung der jeweiligen Absorbersegmente 84,86,92,94 von der Reduktionstemperatur T_{red} auf die Oxidationstemeratur Tₒₓ. Wird nämlich der Absorber 81 im Uhrzeigersinn (s. den Pfeil 96) um einen Schritt von 90 Grad gedreht, befinden sich das Segment mit der Reduktionstemperatur und das Segment mit der Oxidationstemperatur im Raum 90, wobei durch den Kreislauf über die Leitungen 91,95 und den Überströmkanal 93 Wärme vom Segment mit der Reduktionstemperatur auf das Segment mit der Oxidationstemperatur übertragen, somit rekuperiert werden kann: die zur Kühlung für die Oxidation des einen Segments abgeführte Wärme wird auf das andere, für die Reduktion zu erwärmende Segment übertragen.

Auch bei diesem Zyklus wird die Wärme aus der Schwarzkörperstrahlung laufend über die Leitung 85 abgeführt und verwertet.

Es ergibt sich ein Verfahren, wobei erfindungsgemäss am Absorber eine wärmere Reduktionszone und eine kältere Oxidationszone vorgesehen werden, die periodisch für Erwärmung und Abkühlung dem Absorptionsraum zugewendet und danach von diesem wieder abgewendet werden bzw. ein erfindungsgemässer Receiver-Reaktor, bei welchem bevorzugt der Absorber in Bereiche (Segmente) aufgeteilt ist, die wechselweise betriebsfähig mit dem Absorberraum und mit einer Oxidationszone (Raum 87) in Verbindung gebracht werden können, wobei bevorzugt eine Zwischenzone (Raum 90) für die Rekuperation von Wärme vorgesehen ist. Weiter ergibt sich eine Ausführungsform des erfindungsgemässen Receiver-Reaktors, bei welcher bevorzugt die Transportanordnung ausgebildet ist, ein oxidierendes Gas dem Absorber auf einer dem Absorptionsraum abgewendeten Seite zuzuführen.

Es sei an dieser Stelle angemerkt, dass beispielsweise in einer Ausführungsform des Receiver-Reaktors nach Figur 2 oder 4 die Kühlung beschleunigt werden kann, indem die Heliostaten vom Receiver-Reaktor weggeschwenkt werden. Bevorzugt werden dann wenigstens zwei Receiver-Reaktoren vorgesehen und deren Betrieb derart gesteuert, dass die Heliostaten zyklisch vom einen zum anderen Receiver-Reaktor hin- und her geschwenkt werden, dabei der eine jeweils für die Reduktion erwärmt und der andere für die Oxidation gekühlt wird.

Bei einer nicht in den Figuren dargestellten Ausführungsform befindet sich das Wärme transportierende Medium im Absorptionsraum unter Überdruck, mit der Folge, dass sich der Absorptionsraum verkürzt, was wiederum erlaubt, eine Absorbtionsrate über 95% zu realisieren. Dann sind die Transportanordnung und der Absorptionsraum für einen Überdruck des Wärme transportierende Fluid ausgebildet.

## Patentansprüche

1. Verfahren zur Herstellung von Syngas mit Hilfe von Sonnenstrahlung (3), bei welchem der Reaktor eines Receiver-Reaktors (4,50,60,70,80,100) über eine in diesem vorgesehene Öffnung (13) für Sonnenstrahlung (3) durch die Sonnenstrahlung (3) periodisch für einen Reduktionsprozess bis auf eine obere Reduktionstemperatur (Tₒ) erwärmt und danach für einen Oxidationsprozess in Gegenwart eines Oxidationsgases bis auf eine untere Oxidationstemperatur (Tᵤ) gekühlt wird, **dadurch gekennzeichnet, dass** das Sonnenlicht durch eine Absorptionskammer (15,67,71,101) hindurch auf einen als Reaktor ausgebildeten Absorber (14,61,105) geführt wird, der ein reduzierbares/oxidierbares Material aufweist, und wobei ein die Schwarzkörperstrahlung (55,56) des Absorbers (14,61,105) absorbierendes Gas derart durch die Absorptionskammer (15,67,71,101) geleitet und diese derart ausgebildet wird, dass 80% oder mehr der auf einem Pfad zur Öffnung (13) liegenden Schwarzkörperstrahlung (55,56) des Absorbers (14,61,105) absorbiert wird.

2. Verfahren zur Herstellung von Syngas mit Hilfe von Sonnenstrahlung (3) nach Anspruch 1, wobei 85% oder mehr, bevorzugt 90% oder mehr, ganz besonders bevorzugt 95% oder mehr der auf auf dem Pfad zur Öffnung (13) laufenden Schwarzkörperstrahlung (55,56) des Absorbers (14,61,105) absorbiert wird, wobei am meisten bevorzugt diese im Wesentlichen durch das Gas absorbiert wird.

3. Verfahren nach Anspruch 1, wobei als infrarot absorbierendes Gas ein wenigstens oxidierendes Gas, bevorzugt Wasserdampf oder CO₂ verwendet wird, welches durch die Absorptionskammer (15,67,71,101) hindurch zum Absorber (14,61,105) geleitet wird, derart, dass es in der Absorptionskammer (15,67,71,101) an der Redox-Reaktion teilnimmt und durch den Absorber (14,61,105) in der Oxidationsphase reduziert wird.

4. Verfahren nach Anspruch 1, wobei als infrarot absorbierendes Gas ein Gas mit einem Sauerstoffpartialdruck bei einer während der Reduktionsphase des Redox-Reaktors (4,50,60,70,80,100) herrschenden Temperatur von gleich oder weniger als dem höheren Wert des Sauerstoffpartialdrucks von Wasserdampf oder CO₂ bei dieser Temperatur verwendet wird, und wobei dieses Gas wenigstens während der Reduktionsphase durch die Absorptionskammer (15,67,71,101) hindurch zum Absorber (14,61,105) geleitet wird, derart, dass dieser in Gegenwart dieses Gases reduziert wird.

5. Verfahren nach Anspruch 3 oder 4, wobei das wenigstens oxidierende Gas stromabwärts nach dem Absorber (14,61,105) in eine Trennstation (9) geleitet und in dieser Syngas aus ihm abgetrennt wird, wobei bevorzugt das oxidierende Gas weiter im Kreislauf zur Absorptionskammer (15,67,71,101) zurückgeführt, dabei in diesem Kreislauf in Strömungsrichtung vor dem Absorber (14,61,105) in einem Wärmetauscher (7) gekühlt wird.

6. Verfahren nach Anspruch 3 oder 4, wobei das wenigstens oxidierende Gas während dem Reduktionsprozess und/oder während dem Oxidationsprozess des Absorbers (14,61,105) durch diesen hindurchgeführt wird, bevorzugt derart, dass es sich konvektiv erwärmt.

7. Verfahren nach Anspruch 1, wobei das absorbierende Gas nach der Absorption der Schwarzkörperstrahlung des Absorbers (14,61,105) als Wärme transportierendes Fluid aus dem Receiver-Reaktor (4,50,60,70,80,100) abgeführt wird, ohne dass es an der Redox-Reaktion teilnimmt, und wobei vom absorbierenden Gas getrennt ein wenigstens oxidierendes Gas dem Absorber (14,61,105) für die Redox-Reaktion zugeführt wird.

8. Verfahren nach Anspruch 7, wobei das wenigstens oxidierende Gas der vom Absorptionsraum abgewandten Seite des Absorbers (14,61,105) zugeführt wird.

9. Verfahren nach Anspruch 7, wobei das wenigstens oxidierende Gas durch den Absorber (14,61,105) hindurch geleitet wird, wobei bevorzugt der Absorber (14,61,105) durch ein Leitungsbündel (105) für das oxidierende Gas ausgebildet ist.

10. Verfahren nach Anspruch 1, wobei als infrarot absorbierendes Gas ein heteropolares Gas, bevorzugt eines oder ein Gemisch der Gase CO₂, Wasserdampf, CH₄, NH₃, CO, SO₂, SO₃, HCl, NO, und NO₂, verwendet wird.

11. Verfahren nach Anspruch 1, wobei sich durch Absorption der Schwarzkörperstrahlung (55,56) des Absorbers (14,61,105) erwärmtes Gas aus dem Absorberraum (15,67,71,101) entnommen wird, sobald es teilerwärmt ist und/oder ein teilerwärmtes Gas dem Absorberraum (15,67,71,101) zugeführt wird, und wobei die Zufuhr im Absorberraum (15,67,71,101) am jeweiligen Ort stattfindet, wo im Wesentlichen die Temperatur im Absorberraum (15,67,71,101) der Temperatur des teilerwärmten Gases entspricht.

12. Verfahren nach Anspruch 1, wobei als reduzierbares/oxidierbares Material Ceriumdioxid (CeO2), dotiertes CeO2, oder Perovskite verwendet werden.

13. Solarer Reaktor-Receiver (4,50,60,70,80,100) mit einer optischen Öffnung (13) für die Strahlung der Sonne, einem im Pfad des einfallenden Lichts (3) angerordneten Absorber (14,61,105), einem Redox-Reaktor für eine Redox-Reaktion und einer Transportanordnung in welcher ein oxidierendes Gas betriebsfähig zum Reaktor und von diesem weg geführt wird, **dadurch gekennzeichnet dass** der Absorber (14,61,105) als Redox-Reaktor ausgebildet ist, zwischen der Öffnung (13) für die Strahlung der Sonne und dem Absorber (14,61,105) im Pfad des einfallenden Lichts (3) und im Pfad von Schwarzkörperstrahlung (55,56) des Absorbers (14,61,105) eine Absorptionskammer (15,67,71,101) angeordnet ist, und dass die Transportanordnung eine Kreislauf - Leitungsanordnung (6,8) aufweist, in welchem ein Wärme transportierendes Fluid zirkuliert, wobei der Kreislauf derart ausgebildet ist, dass das Wärme transportierende Fluid in der Absorptionskammer (15,67,71,101) mit Wärme beladen und im Wärmetauscher (7) wieder abgekühlt werden kann, wobei das Wärme transportierende Fluid ein infrarot absorbierendes Gas ist, welches die auf einem Pfad durch die Öffnung (13) laufende Schwarzkörper-Strahlung (55,56) des Absorbers (14,61,105) absorbiert.

14. Solarer Reaktor-Receiver nach Anspruch 13, wobei das Wärme transportierendes Fluid so zusammengesetzt und die Transportanordnung sowie der Absorberraum (15,67,71,101) derart ausgebildet sind, dass im Betrieb des Reaktors das Wärme transportierende Fluid ≥ 80%, bevorzugt ≥ 90% und ganz bevorzugt ≥ 94 % der Schwarzkörperstrahlung (55,56) des Absorbers (14,61,105) absorbiert, die auf einem Pfad durch die Öffnung (13) für die Strahlung (3) der Sonne liegt.

15. Solarer Reaktor-Receiver nach Anspruch 13, wobei das Wärme transportierende Fluid ein während der Oxidation des Absorbers (14,61,105) reduzierbares Gas ist und wobei das reduzierbare/oxidierbare Material des Absorbers (14,61,105) an diesem derart angeordnet ist, dass es betriebsfähig im Strömungsweg des Wärme transportierenden Fluid liegt, so dass das Fluid in der Oxidationsphase des Redox-Reaktors reduziert wird.

16. Solarer Reaktor-Receiver nach Anspruch 13, wobei das Wärme transportierende Fluid ein infrarot absorbierendes Gas ist mit einem Sauerstoffpartialdruck, der bei einer während der Reduktionsphase des Redox-Reaktors herrschenden Temperatur gleich oder weniger hoch ist als der höhere Wert des Sauerstoffpartialdrucks von Wasserdampf oder CO₂ bei dieser Temperatur, und wobei die Kreislauf Leitungsanordnung (6,8) ausgebildet ist, dieses Gas wenigstens während der Reduktionsphase durch die Absorptionskammer (15,67,71,101) hindurch zum Absorber (14,61,105) zu leiten, derart, dass der Absorber (14,61,105) im Betrieb während seiner Reduktionsphase in Gegenwart dieses Gases reduziert wird.

17. Solarer Reaktor-Receiver nach Anspruch 13, wobei die Kreislauf-Leitungsanordnung (6,8) weiter eine Trennstation (9) aufweist, die ausgebildet ist, aus dem Wärme transportierenden Fluid Syngas abzutrennen und für die Entnahme aus dem Kreislauf bereit zu stellen.

18. Solarer Reaktor-Receiver nach Anspruch 13, wobei das reduzierbare/oxidierbare Material an der Absorptionskammer (15,67,71,101) zugewendeten Oberfläche des Absorbers (14, 61,105) angeordnet und bevorzugt der Absorber (14,61,105) plattenförmig ausgebildet ist.

19. Solarer Reaktor-Receiver nach Anspruch 13, wobei der Absorber (14,61,105) für die Durchströmung von Wärme transportierendem Fluid ausgebildet ist und die Oberfläche des durchströmten Bereichs wenigstens teilweise aus reduzierbarem/oxidierbarem Material besteht.

20. Solarer Reaktor-Receiver nach Anspruch 13, wobei der Receiver-Reaktor (4,50,60,70,80, 100) weiter eine Leitungsanordnung für wenigstens oxidierendes Gas aufweist, welche dieses getrennt vom absorbierenden Gas führt.

21. Solarer Reaktor-Receiver nach Anspruch 20, wobei der Absorber (14,61,105) der Kreislauf-Leitungsanordnung (6,8) und der weiteren Leitungsanordnung (10,10') für oxidierendes Gas zugeordnet ist und zwischen dem Strömungspfad des Wärme transportierenden Fluid und demjenigen des oxidierenden Gases eine Trennwand bildet.

22. Solarer Reaktor-Receiver nach Anspruch 20, wobei der Absorber (14,61,105) als Abschnitt der weiteren Leitungsanordnung (10,10') ausgebildet ist und wenigstens eine Leitung (105) für das wenigstens oxidierende Gas aufweist, an deren Innenwand reduzierbares/oxidierbares Material angeordnet ist.

23. Solarer Reaktor-Receiver nach Anspruch 22, wobei der Absorber (14,61,105) als Leitungsbündel (105) für wenigstens oxidierendes Gas ausgebildet ist.

24. Receiver-Reaktor nach Anspruch 13, wobei das Gas ein heteropolares Gas ist, bevorzugt eines oder ein Gemisch der Gase CO₂, Wasserdampf, CH₄, NH₃, CO, SO₂, SO₃, HCl, NO, und NO₂.

25. Receiver-Reaktor nach Anspruch 13, wobei das reduzierbare Material Ceriumdioxid (CeO₂), dotiertes CeO2, oder Perovskite aufweist.

26. Receiver-Reaktor nach Anspruch 13, wobei die Transportanordnung eine oder mehrere mit einem Absorberraum (15,67,71,101) verbundene Leitungen (51 bis 51"',52 bis 52‴) für Wärme transportierendes Gas aufweist, die derart angeordnet sind, dass dem Absorberraum (15,67,71,101) teilerwärmtes Gas entnommen und/oder teilerwärmtes Gas an einem Ort zugeführt werden kann, an welchem im Wesentlichen die Temperatur des Gases im Absorberraum (15,67,71,101) der Temperatur des teilerwärmten, zugeführten Gases entspricht.

27. Receiver-Reaktor nach Anspruch 13, wobei die Wände des Absorptionskammer (15,67,71,101) und/oder der Absorber (14,61,105) frei sind von im Normalbetrieb aktivierten Kühlmitteln, insbesondere Kühlkanälen.

28. Receiver-Reaktor nach Anspruch 13, wobei die Transportanordnung und der Absorptionskammer (15,67,71,101) für einen Überdruck des Wärme transportierenden Fluid ausgebildet sind.

29. Receiver-Reaktor nach Anspruch 13, wobei im Absorptionsraum ein bevorzugt reduzierbares/ oxidierbares Material aufweisender Sekundärabsorber (64) vorgesehen und derart angeordnet und ausgebildet ist, dass er durch die Strahlung des Absorbers (14,61,105) erwärmbar ist, und im Betrieb über seine eigene Strahlung seinerseits in den Absorberraum (15,67,71,101) wirkt, wobei er bevorzugt plattenförmig ausgebildet ist und besonders bevorzugt den Absorber (14,61,105) im Wesentlichen nicht beschattet.

## Claims

1. A method of producing syngas with the aid of solar radiation (3), in which the reactor of a receiver reactor (4, 50, 60, 70, 80, 100) is periodically heated by the solar radiation (3) via an opening (13) provided therein for solar radiation (3) to an upper reduction temperature (To) for a reduction process and is then cooled to a lower oxidation temperature (Tu) for an oxidation process in the presence of an oxidizing gas, wherein the solar radiation (3) is passed through an absorption chamber (15, 67, 71, 101) to an absorber (14, 61, 105) which is in the form of a reactor, that the sunlight is guided through an absorption chamber (15,67,71,101) onto an absorber (14,61,105) formed as a reactor and comprising a reducible/oxidizable material, and wherein a gas absorbing the blackbody radiation (55,56) of the absorber (14, 61,105) is passed through the absorption chamber (15,67,71,101) and the absorption chamber (15,67,71,101) is formed such that 80% or more of the blackbody radiation (55,56) of the absorber (14,61,105) lying on a path to the opening (13) is absorbed.

2. A method for producing syngas by means of solar radiation (3) according to claim 1, wherein 85% or more, preferably 90% or more, most preferably 95% or more of the blackbody radiation (55,56) of the absorber (14,61,105) running on a path to the opening (13) is absorbed, most preferably being substantially absorbed by the gas.

3. A method according to claim 1, wherein as infrared absorbing gas an at least oxidizing gas, preferably water vapor or CO2, is used, which is passed through the absorption chamber (15,67,71,101) to the absorber (14,61,105) such that it participates in the redox reaction in the absorption chamber (15,67,71,101) and is reduced by the absorber (14,61,105) in the oxidation phase.

4. A method according to claim 1, wherein as infrared absorbing gas a gas having an oxygen partial pressure at a temperature prevailing during the reduction phase of the redox reactor (4,50,60,70,80,100) equal to or less than the higher value of the oxygen partial pressure of water vapor or CO2 at this temperature is used, and wherein said gas is passed through the absorption chamber (15,67,71,101) to the absorber (14,61,105) at least during the reduction phase, so that the absorber is reduced in the presence of said gas.

5. A method according to claim 3 or 4, wherein the at least oxidizing gas is conducted downstream of the absorber (14, 61, 105) into a separation station (9) and syngas is separated therefrom, wherein preferably the oxidizing gas is further recirculated to the absorption chamber (15, 67, 71, 101), thereby being cooled in a heat exchanger (7) in this circuit upstream of the absorber (14, 61, 105) in the direction of flow.

6. A method according to claim 3 or 4, wherein the at least oxidizing gas is passed through the absorber (14,61,105) during the reduction process and/or during the oxidation process of the absorber (14,61,105), preferably in such a way that it is heated convectively.

7. A method according to claim 1, wherein the absorbing gas is discharged from the receiver reactor (4,50,60,70,80,100) as a heat-transporting fluid after absorption of the blackbody radiation of the absorber (14,61,105), without participating in the redox reaction, and wherein separately from the absorbing gas an at least oxidizing gas is supplied to the absorber (14,61,105) for the redox reaction.

8. A method according to claim 7, wherein the at least oxidizing gas is supplied to the side of the absorber (14,61,105) facing away from the absorption space.

9. A method according to claim 7, wherein the at least oxidizing gas is passed through the absorber (14,61,105), preferably wherein the absorber (14,61,105) is formed by a conduit bundle (105) for the oxidizing gas.

10. A method according to claim 1, wherein the infrared absorbing gas is a heteropolar gas, preferably one or a mixture of the gases CO2, water vapor, CH4, NH3, CO, SO2, SO3, HCl, NO, and NO2.

11. A method according to claim 1, wherein gas heated by absorption of the blackbody radiation (55,56) of the absorber (14,61,105) is removed from the absorber space (15,67,71,101) as soon as it is partially heated and/or a partially heated gas is supplied to the absorber space (15, 67,71,101), and wherein the supply in the absorber space (15,67,71,101) takes place at the respective location where substantially the temperature in the absorber space (15,67,71,101) corresponds to the temperature of the partially heated gas.

12. A method according to claim 1, wherein the reducible/oxidizable material used is cerium dioxide (CeO2), doped CeO2, or perovskites.

13. A solar reactor-receiver (4,50,60,70,80,100) comprising an optical aperture (13) for radiation from the sun, an absorber (14,61,105) arranged in the path of incident light (3), a redox reactor for a redox reaction, and a transport arrangement in which an oxidizing gas is operatively guided to and from the reactor, **characterized in that** the absorber (14,61,105) is designed as a redox reactor, between the opening (13) for the radiation of the sun and the absorber (14,61,105) in the path of the incident light (3) and in the path of blackbody radiation (55,56) of the absorber (14, 61,105), and **in that** the transport arrangement comprises a circuit conduit arrangement (6,8) in which a heat-transporting fluid circulates, the circuit being designed in such a way that the heat-transporting fluid in the absorption chamber (15,67,71,101) is filled with heat, 67,71,101) and cooled in the heat exchanger (7), wherein the heat transporting fluid is an infrared absorbing gas which absorbs blackbody radiation (55,56) from the absorber (14,61,105) passing in a path through the opening (13).

14. Solar reactor-receiver according to claim 13, wherein the heat transporting fluid is composed and the transport arrangement as well as the absorber space (15,67,71,101) are formed such that during operation of the reactor the heat transporting fluid absorbs ≥ 80%, preferably ≥ 90% and most preferably ≥ 94% of the blackbody radiation (55,56) of the absorber (14,61,105) which is on a path through the aperture (13) for the radiation (3) of the sun.

15. Solar reactor-receiver according to claim 13, wherein said heat transporting fluid is a reducible gas during oxidation of said absorber (14,61,105), and wherein said reducible/oxidizable material of said absorber (14,61,105) is disposed thereon such that it is operably in the flow path of said heat transporting fluid such that said fluid is reduced in the oxidation phase of said redox reactor.

16. Solar reactor-receiver of claim 13, wherein the heat transporting fluid is an infrared absorbing gas having an oxygen partial pressure equal to or less than the higher of the oxygen partial pressure of water vapor or CO2 at a temperature prevailing during the reduction phase of the redox reactor, and wherein the circuit conduit arrangement (6,8) is adapted to conduct said gas through the absorption chamber (15,67,71,101) to the absorber (14,61,105) at least during the reduction phase, such that the absorber (14,61,105) is reduced in operation during its reduction phase in the presence of said gas.

17. Solar reactor-receiver according to claim 13, wherein the circuit conduit arrangement (6,8) further comprises a separation station (9) adapted to separate syngas from the heat-transporting fluid and to make it available for removal from the circuit.

18. Solar reactor-receiver according to claim 13, wherein the reducible/oxidizable material is arranged on the surface of the absorber (14, 61, 105) facing the absorption chamber (15, 67, 71, 101) and preferably the absorber (14, 61, 105) is plate-shaped.

19. Solar reactor-receiver according to claim 13, wherein the absorber (14, 61, 105) is designed for the through-flow of heat-transporting fluid and the surface of the through-flowed region consists at least partially of reducible/oxidizable material.

20. Solar reactor-receiver according to claim 13, wherein the receiver-reactor (4,50,60,70,80,100) further comprises a conduit arrangement for at least oxidizing gas, which conduit arrangement conducts the oxidizing gas separately from the absorbing gas.

21. Solar reactor-receiver according to claim 20, wherein the absorber (14,61,105) is associated with the circuit conduit arrangement (6,8) and the further conduit arrangement (10,10') for oxidizing gas and forms a partition between the flow path of the heat transporting fluid and that of the oxidizing gas.

22. Solar reactor-receiver according to claim 20, wherein the absorber (14,61,105) is formed as a section of the further conduit arrangement (10,10') and comprises at least one conduit (105) for the at least oxidizing gas, on the inner wall of which reducible/oxidizable material is arranged.

23. Solar reactor-receiver according to claim 22, wherein the absorber (14,61,105) is formed as a conduit bundle (105) for at least oxidizing gas.

24. Receiver-reactor according to claim 13, wherein the gas is a heteropolar gas, preferably one or a mixture of the gases CO2, water vapor, CH4, NH3, CO, SO2, SO3, HCl, NO, and NO2.

25. Receiver reactor according to claim 13, wherein the reducible material comprises cerium dioxide (CeO2), doped CeO2, or perovskites.

26. Receiver Reactor of claim 13, wherein the transport arrangement comprises one or more conduits (51 to 51",52 to 52‴) for heat transporting gas connected to an absorber compartment (15,67,71,101), arranged such that heat transporting gas is conveyed to the absorber compartment (15, 67, 71, 101) and/or partially heated gas can be supplied at a location at which the temperature of the gas in the absorber space (15, 67, 71, 101) essentially corresponds to the temperature of the partially heated, supplied gas.

27. Receiver reactor according to claim 13, wherein the walls of the absorption chamber (15,67,71,101) and/or the absorber (14,61,105) are free of cooling means activated during normal operation, in particular cooling channels.

28. Receiver reactor according to claim 13, wherein the transport arrangement and the absorption chamber (15,67,71,101) are designed for an overpressure of the heat-transporting fluid.

29. Receiver reactor according to claim 13, wherein a secondary absorber (64) preferably comprising reducible/oxidizable material is provided in the absorption chamber and is arranged and designed in such a way that it can be heated by the radiation of the absorber (14, 61, 105) and, in operation, acts in turn into the absorber chamber (15, 67, 71, 101) via its own radiation, wherein it is preferably designed in the form of a plate and, in particular, preferably does not substantially shade the absorber (14, 61, 105).

## Revendications

1. Procédé de production de syngaz à l'aide du rayonnement solaire (3), dans lequel le réacteur d'un récepteur-réacteur (4, 50, 60, 70, 80, 100) est chauffé périodiquement par le rayonnement solaire (3) par l'intermédiaire d'une ouverture (13) prévue dans celui-ci pour le rayonnement solaire (3) pour un processus de réduction jusqu'à une température de réduction supérieure (To) et est ensuite refroidi pour un processus d'oxydation en présence d'un gaz oxydant jusqu'à une température d'oxydation inférieure (Tu), **caractérisé, en ce que** la lumière solaire est guidée à travers une chambre d'absorption (15, 67, 71, 101) sur un absorbeur (14, 61, 105) réalisé sous la forme d'un réacteur, qui présente un matériau réductible/oxydable, et **en ce qu'**un matériau (55, 56) du corps noir de l'absorbeur (14, 61, 105) est guidé à travers la chambre d'absorption (15, 67, 71, 101) et celle-ci est formée de telle sorte que 80% ou plus du rayonnement du corps noir (55, 56) de l'absorbeur (14, 61, 105) se trouvant sur un chemin vers l'ouverture (13) est absorbé.

2. Procédé de production de gaz de synthèse à l'aide du rayonnement solaire (3) selon la revendication 1, dans lequel 85% ou plus, de préférence 90% ou plus, de manière particulièrement préférée 95% ou plus du rayonnement du corps noir (55, 56) de l'absorbeur (14, 61, 105) passant sur le trajet vers l'ouverture (13) est absorbé, de manière la plus préférée étant essentiellement absorbé par le gaz.

3. Procédé selon la revendication 1, dans lequel on utilise comme gaz absorbant dans l'infrarouge un gaz au moins oxydant, de préférence de la vapeur d'eau ou du CO2, qui est conduit à travers la chambre d'absorption (15, 67, 71, 101) vers l'absorbeur (14, 61, 105), de telle sorte qu'il participe à la réaction d'oxydoréduction dans la chambre d'absorption (15, 67, 71, 101) et qu'il est réduit par l'absorbeur (14, 61, 105) dans la phase d'oxydation.

4. Procédé selon la revendication 1, dans lequel on utilise comme gaz absorbant dans l'infrarouge un gaz ayant une pression partielle d'oxygène à une température, régnant pendant la phase de réduction du réacteur d'oxydoréduction (4, 50, 60, 70, 80, 100), égale ou inférieure à la valeur la plus élevée de la pression partielle d'oxygène de la vapeur d'eau ou du CO2 à cette température, et ce gaz étant envoyé, au moins pendant la phase de réduction, à travers la chambre d'absorption (15, 67, 71, 101) vers l'absorbeur (14, 61, 105), de manière à ce que celui-ci soit réduit en présence de ce gaz.

5. Procédé selon la revendication 3 ou 4, dans lequel le gaz au moins oxydant est conduit en aval de l'absorbeur (14, 61, 105) dans une station de séparation (9) et, dans celle-ci, le gaz de synthèse en est séparé, le gaz oxydant étant de préférence renvoyé en circuit vers la chambre d'absorption (15, 67, 71, 101), tout en étant refroidi dans ce circuit dans le sens d'écoulement en amont de l'absorbeur (14, 61, 105) dans un échangeur de chaleur (7).

6. Procédé selon la revendication 3 ou 4, dans lequel le gaz au moins oxydant passe à travers l'absorbeur (14, 61, 105) pendant le processus de réduction et/ou pendant le processus d'oxydation de l'absorbeur, de préférence de telle sorte qu'il se réchauffe par convection.

7. Procédé selon la revendication 1, dans lequel le gaz absorbant est évacué du réacteur récepteur (4, 50, 60, 70, 80, 100) après l'absorption du rayonnement du corps noir de l'absorbeur (14, 61, 105) sous forme de fluide transportant de la chaleur, sans participer à la réaction d'oxydoréduction, et dans lequel un gaz au moins oxydant est amené à l'absorbeur (14, 61,105) séparément du gaz absorbant pour la réaction d'oxydoréduction.

8. Procédé selon la revendication 7, dans lequel le gaz au moins oxydant est amené au côté de l'absorbeur (14, 61, 105) opposé à l'espace d'absorption.

9. Procédé selon la revendication 7, dans lequel le gaz au moins oxydant est conduit à travers l'absorbeur (14, 61, 105), l'absorbeur (14, 61, 105) étant de préférence formé par un faisceau de conduites (105) pour le gaz oxydant.

10. Procédé selon la revendication 1, dans lequel on utilise comme gaz absorbant dans l'infrarouge un gaz hétéropolaire, de préférence un gaz ou un mélange des gaz CO2, vapeur d'eau, CH4, NH3, CO, SO2, SO3, HCl, NO, et NO2.

11. Procédé selon la revendication 1, dans lequel du gaz chauffé par absorption du rayonnement du corps noir (55, 56) de l'absorbeur (14, 61, 105) est retiré de la chambre d'absorption (15, 67, 71, 101) dès qu'il est partiellement chauffé et/ou qu'un gaz partiellement chauffé est introduit dans la chambre d'absorption (15, 67, 71, 101), 67, 71, 101), et dans lequel l'alimentation dans la chambre d'absorption (15, 67, 71, 101) a lieu à l'endroit respectif où la température dans la chambre d'absorption (15, 67, 71, 101) correspond sensiblement à la température du gaz partiellement chauffé.

12. Procédé selon la revendication 1, dans lequel on utilise comme matériau réductible/oxydable du dioxyde de cérium (CeO2), du CeO2 dopé, ou des perovskites.

13. Récepteur de réacteur solaire (4, 50, 60, 70, 80, 100) avec une ouverture optique (13) pour le rayonnement du soleil, un absorbeur (14, 61, 105) disposé dans le chemin de la lumière incidente (3), un réacteur d'oxydoréduction pour une réaction d'oxydoréduction et un dispositif de transport dans lequel un gaz oxydant est conduit de manière opérationnelle vers le réacteur et à partir de celui-ci, **caractérisé en ce que** l'absorbeur (14, 61, 105) est réalisé sous la forme d'un réacteur redox, **en ce qu'**entre l'ouverture (13) pour le rayonnement du soleil et l'absorbeur (14, 61, 105), dans le trajet de la lumière incidente (3) et dans le trajet du rayonnement du corps noir (55, 56) de l'absorbeur (14, 61, 105), il y a une différence de température entre les deux, 61, 105) est disposée une chambre d'absorption (15, 67, 71, 101), et **en ce que** l'agencement de transport présente un agencement de circuit - conduite (6, 8) dans lequel circule un fluide transportant de la chaleur, le circuit étant conçu de telle sorte que le fluide transportant de la chaleur dans la chambre d'absorption (15, 67, 71, 101) et être refroidi dans l'échangeur de chaleur (7), le fluide de transport de chaleur étant un gaz absorbant l'infrarouge qui absorbe le rayonnement du corps noir (55, 56) de l'absorbeur (14, 61, 105) passant par l'ouverture (13).

14. Récepteur de réacteur solaire selon la revendication 13, dans lequel le fluide de transport de chaleur est composé et l'agencement de transport ainsi que l'espace d'absorption (15, 67, 71, 101) sont formés de telle sorte que, lors du fonctionnement du réacteur, le fluide de transport de chaleur absorbe ≥ 80 %, de préférence ≥ 90 % et de manière tout à fait préférée ≥ 94 % du rayonnement de corps noir (55, 56) de l'absorbeur (14, 61, 105) qui se trouve sur un chemin à travers l'ouverture (13) pour le rayonnement (3) du soleil.

15. Récepteur de réacteur solaire selon la revendication 13, dans lequel le fluide de transport de chaleur est un gaz réductible pendant l'oxydation de l'absorbeur (14, 61, 105), et dans lequel le matériau réductible/oxydable de l'absorbeur (14, 61, 105) est disposé sur celui-ci de manière à se trouver de façon opérationnelle dans le trajet d'écoulement du fluide de transport de chaleur, de sorte que le fluide est réduit pendant la phase d'oxydation du réacteur redox.

16. Récepteur de réacteur solaire selon la revendication 13, dans lequel le fluide de transport de chaleur est un gaz absorbant l'infrarouge ayant une pression partielle d'oxygène qui, à une température régnant pendant la phase de réduction du réacteur d'oxydoréduction, est égale ou inférieure à la valeur la plus élevée de la pression partielle d'oxygène de la vapeur d'eau ou du CO2 à cette température, et le circuit (6, 8) étant conçu pour conduire ce gaz à travers la chambre d'absorption (15, 67, 71, 101) jusqu'à l'absorbeur (14, 61, 105) au moins pendant la phase de réduction, de telle sorte que l'absorbeur (14, 61, 105) soit réduit en fonctionnement pendant sa phase de réduction en présence de ce gaz.

17. Récepteur de réacteur solaire selon la revendication 13, dans lequel le dispositif de conduite de circuit (6, 8) présente en outre une station de séparation (9) qui est conçue pour séparer le syngaz du fluide transportant la chaleur et le mettre à disposition pour le prélèvement du circuit.

18. Récepteur de réacteur solaire selon la revendication 13, dans lequel le matériau réductible/oxydable est disposé sur la surface de l'absorbeur (14,61,105) tournée vers la chambre d'absorption (15, 67, 71, 101) et, de préférence, l'absorbeur (14, 61, 105) est réalisé en forme de plaque.

19. Récepteur de réacteur solaire selon la revendication 13, dans lequel l'absorbeur (14, 61, 105) est conçu pour le passage d'un fluide transportant de la chaleur et la surface de la zone traversée est constituée au moins en partie d'un matériau réductible/oxydable.

20. Récepteur de réacteur solaire selon la revendication 13, dans lequel le réacteur-récepteur (4, 50, 60, 70, 80, 100) présente en outre un dispositif de conduite pour au moins le gaz oxydant, qui le conduit séparément du gaz absorbant.

21. Récepteur de réacteur solaire selon la revendication 20, dans lequel l'absorbeur (14, 61, 105) est associé à l'agencement de conduites de circulation (6, 8) et à l'autre agencement de conduites (10, 10') pour le gaz oxydant et forme une paroi de séparation entre le trajet d'écoulement du fluide de transport de chaleur et celui du gaz oxydant.

22. Récepteur de réacteur solaire selon la revendication 20, dans lequel l'absorbeur (14, 61, 105) est conçu comme un tronçon de l'autre agencement de conduites (10, 10') et présente au moins une conduite (105) pour le gaz au moins oxydant, sur la paroi intérieure de laquelle est disposé un matériau réductible/oxydable.

23. Récepteur de réacteur solaire selon la revendication 22, dans lequel l'absorbeur (14, 61, 105) est conçu comme un faisceau de conduites (105) pour au moins le gaz oxydant.

24. Récepteur de réacteur selon la revendication 13, dans lequel le gaz est un gaz hétéropolaire, de préférence un gaz ou un mélange des gaz CO2, vapeur d'eau, CH4, NH3, CO, SO2, SO3, HCl, NO, et NO2.

25. Réacteur-récepteur selon la revendication 13, dans lequel le matériau réductible comprend du dioxyde de cérium (CeO2), du CeO2 dopé, ou des perovskites.

26. Réacteur-récepteur selon la revendication 13, dans lequel l'agencement de transport présente une ou plusieurs conduites (51 à 51‴, 52 à 52‴) reliées à une chambre d'absorption (15, 67, 71, 101) pour un gaz transportant de la chaleur, qui sont disposées de telle sorte que la chambre d'absorption (15, 67, 71, 101) peut être prélevé du gaz partiellement chauffé et/ou du gaz partiellement chauffé peut être amené à un endroit où la température du gaz dans la chambre d'absorption (15, 67, 71, 101) correspond essentiellement à la température du gaz amené partiellement chauffé.

27. Réacteur-récepteur selon la revendication 13, dans lequel les parois de la chambre d'absorption (15, 67, 71, 101) et/ou de l'absorbeur (14, 61, 105) sont exemptes de moyens de refroidissement activés en fonctionnement normal, notamment de canaux de refroidissement.

28. Réacteur-récepteur selon la revendication 13, dans lequel le dispositif de transport et la chambre d'absorption (15, 67, 71, 101) sont conçus pour une surpression du fluide transportant la chaleur.

29. Réacteur-récepteur selon la revendication 13, dans lequel un absorbeur secondaire (64) présentant de préférence un matériau réductible/oxydable est prévu dans la chambre d'absorption et est disposé et conçu de telle sorte qu'il peut être chauffé par le rayonnement de l'absorbeur (14, 61, 105) et qu'en fonctionnement, il agit à son tour dans la chambre d'absorption (15, 67, 71, 101) par l'intermédiaire de son propre rayonnement, étant de préférence conçu en forme de plaque et, de préférence, ne faisant sensiblement pas d'ombre à l'absorbeur (14, 61, 105).
